# EUROPEAN PATENT APPLICATION

(11) **EP 4 737 148 A1**
(43) Date of publication of application: **06.05.2026**
(21) Application number: 24830648.2
(22) Date of filing: 21.06.2024
(51) Int. Cl.: B60J 3/04, G02F 1/01, G02F 1/1333

(54) **SWITCHABLE GLASS SYSTEM FOR VEHICLE AND CONTROL METHOD THEREFOR**

(30) Priority: 28.06.2023 CN 202310778691
(71) Applicant: Boe Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); CHU, Xiao, Beijing 100176 (CN)
(74) Representative: AWA Sweden AB
(86) International application number: PCT/CN2024/100683
(87) International publication number: WO 2025/002003

(57) **Abstract**

A method for controlling a dimming glass system for a vehicle is provided, where the dimming glass system includes a dimming glass sheet mounted on the vehicle. The control method includes: acquiring a vehicle driving mode selected by a user from preset m vehicle driving modes, where m is a positive integer greater than or equal to 2; determining, according to a mapping relationship between vehicle driving modes and dimming modes, a dimming mode corresponding to the vehicle driving mode selected by the user, where the mapping relationship between the vehicle driving modes and the dimming modes includes a mapping relationship between the preset m vehicle driving modes and n dimming modes, and n is a positive integer greater than or equal to 2; and controlling the dimming glass system of the vehicle according to the dimming mode. A dimming glass system for a vehicle is further provided.

## Description

### TECHNICAL FIELD

The present disclosure relates to the field of controllable dimming technologies, and in particular, to a dimming glass system for a vehicle and a method for controlling the same.

### BACKGROUND

Dimming glass, also referred to as frosted glass, electrically controlled glass, or smart dimming glass, is capable of changing its light transmittance by adjusting an input electrical signal. With the advancement of technology, dimming glass has been increasingly applied in various fields such as automobiles, trains, and building curtain walls.

Dimming glass may switch its light transmittance, i.e., transparency, in response to environmental changes. Adaptively adjusting the transparency of dimming glass according to environmental conditions or user demands has become a continuous focus of research and development.

The above information disclosed in this section is merely for the understanding of the background of technical concepts of the present disclosure. Therefore, the above information may contain information that does not constitute a related art.

### SUMMARY

In an aspect, a method for controlling a dimming glass system for a vehicle is provided, where the dimming glass system includes a dimming glass sheet mounted on the vehicle, the method including: acquiring a vehicle driving mode selected by a user from preset m vehicle driving modes, where m is a positive integer greater than or equal to 2; determining, according to a mapping relationship between vehicle driving modes and dimming modes, a dimming mode corresponding to the vehicle driving mode selected by the user, where the mapping relationship between the vehicle driving modes and the dimming modes includes a mapping relationship between the preset m vehicle driving modes and n dimming modes, where n is a positive integer greater than or equal to 2; and controlling the dimming glass system of the vehicle according to the dimming mode.

According to some exemplary embodiments, each of the n dimming modes has a respective fixed light transmittance or a respective fixed light transmittance ranges; and the controlling the dimming glass system of the vehicle according to the dimming mode includes: controlling the dimming glass system of the vehicle according to the fixed light transmittance or the fixed light transmittance range of the dimming mode.

According to some exemplary embodiments, the m vehicle driving modes include a first vehicle driving mode, the n dimming modes include a first dimming mode, and the mapping relationship between the vehicle driving modes and the dimming modes includes a mapping relationship between the first vehicle driving mode and the first dimming mode; the m vehicle driving modes further include a second driving mode, the n dimming modes further include a second dimming mode, and the mapping relationship between the vehicle driving modes and the dimming modes further includes a mapping relationship between the second vehicle driving mode and the second dimming mode; and a light transmittance or a light transmittance range in the first dimming mode is higher than that in the second dimming mode.

According to some exemplary embodiments, the m vehicle driving modes further include a third driving mode, the n dimming modes further include a third dimming mode, and the mapping relationship between the vehicle driving modes and the dimming modes further includes a mapping relationship between the third vehicle driving mode and the third dimming mode; and a light transmittance or a light transmittance range in the third dimming mode lies between that in the first dimming mode and that in the second dimming mode.

According to some exemplary embodiments, the method further includes: acquiring an occupant distribution inside the vehicle; and determining, according to the occupant distribution inside the vehicle, a dimming glass sheet that requires a light transmittance adjustment.

According to some exemplary embodiments, the method further includes: controlling a front passenger seat to move backward in response to the vehicle turning toward a side where the front passenger seat is located.

According to some exemplary embodiments, the method further includes: detecting at least one of a safety-related event and a privacy-related event of the vehicle; where the controlling the dimming glass system of the vehicle according to the dimming mode includes: determining a light transmittance adjustment information of the dimming glass sheet of the vehicle according to the dimming mode selected by the user and the detected at least one event; and adjusting a light transmittance of the dimming glass sheet according to the light transmittance adjustment information.

According to some exemplary embodiments, in at least two of the n dimming modes, a priority of the safety-related event is different from a priority of the privacy-related event.

According to some exemplary embodiments, the m vehicle driving modes include a first vehicle driving mode, the n dimming modes include a first dimming mode, and the mapping relationship between the vehicle driving modes and the dimming modes includes a mapping relationship between the first vehicle driving mode and the first dimming mode; and in the first dimming mode, the priority of each safety-related event is higher than the priority of the privacy-related event.

According to some exemplary embodiments, the m vehicle driving modes further include a second driving mode, the n dimming modes further include a second dimming mode, and the mapping relationship between the vehicle driving modes and the dimming modes further includes a mapping relationship between the second vehicle driving mode and the second dimming mode; and in the second dimming mode, the priority of at least part of the privacy-related event is higher than the priority of at least part of the safety-related event.

According to some exemplary embodiments, the method further includes: determining an initial light transmittance of the dimming glass sheet according to a determined dimming mode, where an initial light transmittance in the first dimming mode is higher than an initial light transmittance in the second dimming mode.

According to some exemplary embodiments, the safety-related events include at least one event selected from: vehicle turning, lane changing, or a vehicle speed exceeding a speed threshold.

According to some exemplary embodiments, the privacy-related event includes at least one event selected from: a passenger inside the vehicle being in a resting state, or another vehicle being present at a periphery of the vehicle.

According to some exemplary embodiments, the determining a light transmittance adjustment information of the dimming glass sheet of the vehicle according to the determined dimming mode includes: performing a determination on each safety-related event according to the determined first dimming mode; increasing a light transmittance of at least one dimming glass sheet in response to at least one safety-related event satisfying a safety protection trigger condition; performing a determination on the privacy-related event in response to each safety-related event failing to satisfy the safety trigger condition; and decreasing a light transmittance of at least one dimming glass sheet in response to at least one privacy-related event satisfying a privacy protection trigger condition.

According to some exemplary embodiments, the determining a light transmittance adjustment information of the dimming glass sheet of the vehicle according to the determined dimming mode includes: performing a determination on a first safety-related event according to the determined first dimming mode; increasing a light transmittance of at least one dimming glass sheet in response to the first safety-related event satisfying a safety protection trigger condition; performing a determination on a second safety-related event in response to the first safety-related event failing to satisfy the safety protection trigger condition; increasing a light transmittance of at least one dimming glass sheet in response to the second safety-related event satisfying a safety protection trigger condition; performing a determination on at least one privacy-related event in response to the second safety-related event failing to satisfy the safety protection trigger condition; and decreasing a light transmittance of at least one dimming glass sheet in response to at least one privacy-related event satisfying a privacy protection trigger condition.

According to some exemplary embodiments, the determining a light transmittance adjustment information of the dimming glass sheet of the vehicle according to the determined dimming mode includes: performing a determination on at least one privacy-related event according to the determined second dimming mode; performing a determination on at least one safety-related event in response to the at least one privacy-related event satisfying a privacy protection trigger condition; and decreasing a light transmittance of at least one dimming glass sheet in response to the at least one safety-related event failing to satisfy a safety protection trigger condition.

According to some exemplary embodiments, the determining a light transmittance adjustment information of the dimming glass sheet of the vehicle according to the determined dimming mode includes: performing a determination on a first safety-related event according to the determined second dimming mode; increasing a light transmittance of at least one dimming glass sheet in response to the first safety-related event satisfying a safety protection trigger condition; performing a determination on at least one privacy-related event in response to the first safety-related event failing to satisfy the safety protection trigger condition; increasing a light transmittance of at least one dimming glass sheet in response to the at least one privacy-related event failing to satisfy a privacy protection trigger condition; performing a determination on a second safety-related event in response to the at least one privacy-related event satisfying the privacy protection trigger condition; increasing a light transmittance of at least one dimming glass sheet in response to the second safety-related event satisfying a safety protection trigger condition; and decreasing a light transmittance of at least one dimming glass sheet in response to the second safety-related event failing to satisfy the safety protection trigger condition.

According to some exemplary embodiments, the determining a light transmittance adjustment information of the dimming glass sheet of the vehicle according to the determined dimming mode includes: performing a determination on a first safety-related event according to the determined third dimming mode; and increasing a light transmittance of at least one dimming glass sheet in response to the first safety-related event satisfying a safety protection trigger condition.

According to some exemplary embodiments, the first safety-related event includes vehicle turning or lane changing, the second safety-related event includes a vehicle speed exceeding a speed threshold, and the at least one privacy-related event includes another vehicle being present at a periphery of the vehicle.

According to some exemplary embodiments, the first safety-related event satisfying the safety protection trigger condition includes: the vehicle turning or changing lanes; and/or the second safety-related event satisfying the safety protection trigger condition comprises: the vehicle speed of the vehicle exceeding a preset speed threshold; and/or the at least one privacy-related event satisfying the privacy protection trigger condition comprises: another vehicle is present at a periphery of the vehicle.

According to some exemplary embodiments, the method further includes: adjusting an initial light transmittance of the dimming glass sheet according to an environment surrounding the vehicle.

According to some exemplary embodiments, the increasing the light transmittance of at least one dimming glass sheet in response to the first safety-related event satisfying a safety protection trigger condition includes: in response to the first safety-related event satisfying the safety protection trigger condition, increasing a light transmittance of the dimming glass sheets at front-row side windows of the vehicle; and/or the increasing a light transmittance of at least one dimming glass sheet in response to the second safety-related event satisfying a safety protection trigger condition includes: in response to the second safety-related event satisfying the safety protection trigger condition, increasing a light transmittance of the dimming glass sheet at a driver-side window of the vehicle and the light transmittance of the dimming glass sheet at side windows close to passengers inside the vehicle; and/or the decreasing a light transmittance of at least one dimming glass sheet comprises: decreasing the light transmittance of the dimming glass sheet at the driver-side window of the vehicle and the light transmittance of the dimming glass sheet at the side window close to the passenger in the vehicle.

In another aspect, a method for controlling a dimming glass system for a vehicle is provided, where the dimming glass system includes a dimming glass sheet mounted on the vehicle, the method including: acquiring a dimming mode selected by a user from preset n dimming modes, where n is a positive integer greater than or equal to 2; and controlling the dimming glass system of the vehicle according to the dimming mode.

According to some exemplary embodiments, each of the n dimming modes has a respective fixed light transmittance or a respective fixed light transmittance range; and the controlling the dimming glass system of the vehicle according to the dimming mode includes: controlling the dimming glass system of the vehicle according to the fixed light transmittance or the fixed light transmittance range of the dimming mode.

According to some exemplary embodiments, the n dimming modes include a first dimming mode and a second dimming mode; and a light transmittance or a light transmittance range in the first dimming mode is higher than that in the second dimming mode.

According to some exemplary embodiments, the n dimming modes further include a third dimming mode; and a light transmittance or a light transmittance range in the third dimming mode lies between that in the first dimming mode and that in the second dimming mode.

According to some exemplary embodiments, the method further includes: acquiring an occupant distribution inside the vehicle; and determining, according to the occupant distribution inside the vehicle, a dimming glass sheet that requires a light transmittance adjustment.

According to some exemplary embodiments, the method further includes: detecting at least one of a safety-related event and a privacy-related event of the vehicle; where the controlling the dimming glass system of the vehicle according to the dimming mode includes: determining a light transmittance adjustment information of the dimming glass sheet of the vehicle according to the dimming mode selected by the user and the detected at least one event; and adjusting a light transmittance of the dimming glass sheet according to the light transmittance adjustment information.

According to some exemplary embodiments, the method further includes: determining an initial light transmittance of the dimming glass sheet according to the dimming mode selected by the user and an environment surrounding the vehicle.

According to some exemplary embodiments, an initial light transmittance of a dimming glass sheet at a front-row side window of the vehicle is higher than that of a dimming glass sheet at a rear side window of the vehicle.

According to some exemplary embodiments, the method further includes: adjusting a current light transmittance of the dimming glass sheet in response to a user input.

According to some exemplary embodiments, the acquiring a dimming mode selected by a user from preset n dimming modes includes: acquiring a first dimming mode selected by the user from the preset n dimming modes; the detecting at least one of a safety-related event and a privacy-related event of the vehicle includes: detecting the safety-related event of the vehicle; and the determining a light transmittance adjustment information of the dimming glass sheet of the vehicle according to the dimming mode selected by the user and the detected at least one event comprises: increasing a light transmittance of a dimming glass sheet at a front side window of the vehicle according to the first dimming mode selected by the user and a detection of occurrence of the safety-related event.

According to some exemplary embodiments, the determining a light transmittance adjustment information of the dimming glass sheet of the vehicle according to the dimming mode selected by the user and the detected at least one event includes: restoring the light transmittance of the dimming glass sheet at front side window of the vehicle to the current light transmittance according to the first dimming mode selected by the user and a detection of termination of the safety-related event.

According to some exemplary embodiments, the acquiring a dimming mode selected by a user from preset n dimming modes includes: acquiring a second dimming mode selected by the user from the preset n dimming modes; the detecting at least one of a safety-related event and a privacy-related event of the vehicle includes: detecting the privacy-related event of the vehicle; and the determining a light transmittance adjustment information of the dimming glass sheet of the vehicle according to the dimming mode selected by the user and the detected at least one event comprises: decreasing a light transmittance of a dimming glass sheet at a rear side window of the vehicle according to the second dimming mode selected by the user and a detection of occurrence of the privacy-related event.

According to some exemplary embodiments, the determining a light transmittance adjustment information of the dimming glass sheet of the vehicle according to the dimming mode selected by the user and the detected at least one event includes: restoring the light transmittance of the dimming glass sheet at the rear side window of the vehicle to the current light transmittance according to the second dimming mode selected by the user and a detection of termination of the privacy-related event.

According to some exemplary embodiments, the acquiring a dimming mode selected by a user from preset n dimming modes includes: acquiring a third dimming mode selected by the user from the preset n dimming modes; the detecting at least one of a safety-related event and a privacy-related event of the vehicle includes: detecting the safety-related event and the privacy-related event of the vehicle; the determining a light transmittance adjustment information of the dimming glass sheet of the vehicle according to the dimming mode selected by the user and the detected at least one event includes: increasing a light transmittance of a dimming glass sheet at a front side window of the vehicle according to the third dimming mode selected by the user and a detection of occurrence of the safety-related event; restoring the light transmittance of the dimming glass sheet at the front side window of the vehicle to the current light transmittance according to the third dimming mode selected by the user and a detection of termination of the safety-related event; decreasing a light transmittance of a dimming glass sheet at a rear side window of the vehicle according to the third dimming mode selected by the user and a detection of occurrence of the privacy-related event; and restoring the light transmittance of the dimming glass sheet at the rear side window of the vehicle to the current light transmittance according to the third dimming mode selected by the user and a detection of termination of the privacy-related event.

In another aspect, a method for controlling a dimming glass system for a vehicle is provided, where the dimming glass system includes a dimming glass sheet mounted on the vehicle, the method including: acquiring a vehicle driving mode selected by a user from preset m vehicle driving modes, where each of the m vehicle driving modes has a respective safety option, and m is a positive integer greater than or equal to 2; determining, according to the vehicle driving mode selected by the user, a safety option corresponding to the vehicle driving mode selected by the user; detecting a safety-related event of the vehicle; and in response to the safety-related events of the vehicle satisfying a trigger condition of the safety option corresponding to the vehicle driving mode, adjusting a light transmittance of at least one dimming glass sheet of the vehicle according to a first dimming mode among n dimming modes, where n is a positive integer greater than or equal to 2.

According to some exemplary embodiments, each of the m vehicle driving modes has a respective privacy option, the method further including: determining, according to the vehicle driving mode selected by the user, a privacy option corresponding to the vehicle driving mode selected by the user; detecting a privacy-related event of the vehicle; and in response to the privacy-related event of the vehicle satisfying a trigger condition of the privacy option corresponding to the vehicle driving mode, adjusting a light transmittance of at least one dimming glass sheet of the vehicle according to a second dimming mode or a third dimming mode among the n dimming modes.

According to some exemplary embodiments, each of the n dimming modes has a respective fixed light transmittance or a respective fixed light transmittance range, and a light transmittance or a light transmittance range in the first dimming mode is higher than that in the second dimming mode or that in the third dimming mode.

According to some exemplary embodiments, the adjusting a light transmittance of at least one dimming glass sheet of the vehicle according to a first dimming mode among n dimming modes includes: acquiring an occupant distribution inside the vehicle; and determining, according to the occupant distribution inside the vehicle and the first dimming mode, a dimming glass sheet that requires a light transmittance adjustment; and/or the adjusting a light transmittance of at least one dimming glass sheet of the vehicle according to a second dimming mode or a third dimming mode among the n dimming modes comprises: acquiring an occupant distribution inside the vehicle; and determining, according to the occupant distribution inside the vehicle and the second dimming mode, a dimming glass sheet that requires a light transmittance adjustment.

According to some exemplary embodiments, the adjusting a light transmittance of at least one dimming glass sheet of the vehicle according to a first dimming mode among n dimming modes includes: increasing the light transmittance of the at least one dimming glass sheet of the vehicle; and/or the adjusting a light transmittance of at least one dimming glass sheet of the vehicle according to a second dimming mode or a third dimming mode among the n dimming modes comprises: decreasing the light transmittance of the at least one dimming glass sheet of the vehicle.

In yet another aspect, a dimming glass system for a vehicle is provided, including: a dimming glass sheet mounted on the vehicle, where the dimming glass sheet includes: a first base substrate and a second base substrate arranged opposite to each other; a first electrode disposed on the first base substrate; a second electrode disposed on the second base substrate; and a dimming component interposed between the first base substrate and the second base substrate; and a controller electrically connected to the first electrode and the second electrode of the dimming glass sheet, where the controller is configured to perform the methods as described above.

### BRIEF DESCRIPTION OF THE DRAWINGS

Other objectives and advantages of the present disclosure will be apparent from the following description of embodiments of the present disclosure with reference to the accompanying drawings, which may help provide a comprehensive understanding of the present disclosure.
FIG. 1 shows a schematic plan view of a dimming glass sheet according to some exemplary embodiments of the present disclosure;
FIG. 2 shows a cross-sectional view of the dimming glass sheet taken along line AA' in FIG. 1 according to some exemplary embodiments of the present disclosure;
FIG. 3 shows a schematic structural diagram of a dimming glass system for a vehicle according to an exemplary embodiment of the present disclosure;
FIG. 4 shows a flowchart of a method for controlling a dimming glass system according to some exemplary embodiments of the present disclosure;
FIG. 5 shows a flowchart of a method for controlling a dimming glass system according to some exemplary embodiments of the present disclosure;
FIG. 6 shows a flowchart of a method for controlling a dimming glass system in a Sport mode according to some exemplary embodiments of the present disclosure;
FIG. 7 shows an exemplary flowchart of a method for controlling a dimming glass system in a Sport mode according to some exemplary embodiments of the present disclosure;
FIG. 8A to FIG. 8G schematically show a correspondence between an occupant distribution inside the vehicle and a dimming control of glass;
FIG. 9 shows a flowchart of a method for controlling a dimming glass system in a Normal mode according to some exemplary embodiments of the present disclosure;
FIG. 10 shows an exemplary flowchart of a method for controlling a dimming glass system in a Normal mode according to some exemplary embodiments of the present disclosure;
FIG. 11 shows a flowchart of a method for controlling a dimming glass system in an ECO mode according to some exemplary embodiments of the present disclosure;
FIG. 12 shows a flowchart of a method for controlling a dimming glass system according to some other exemplary embodiments of the present disclosure;
FIG. 13 shows a flowchart of a method for controlling a dimming glass system under a first dimming mode according to some other exemplary embodiments of the present disclosure;
FIG. 14 shows a flowchart of a method for controlling a dimming glass system under a second dimming mode according to some other exemplary embodiments of the present disclosure;
FIG. 15 shows a flowchart of a method for controlling a dimming glass system under a third dimming mode according to some other exemplary embodiments of the present disclosure;
FIG. 16 shows a flowchart of a method for controlling a dimming glass system according to further exemplary embodiments of the present disclosure; and
FIG. 17 shows a schematic diagram of an application of a dimming glass system in a vehicle according to an embodiment of the present disclosure, where a top view of the vehicle is illustrated in FIG. 17.

It will be noted that, for the sake of clarity, sizes of layers, structures, or regions in the accompanying drawings used to describe the embodiments of the present disclosure may be enlarged or reduced, that is, the accompanying drawings are not necessarily drawn according to actual scale.

### DETAILED DESCRIPTION OF EMBODIMENTS

Technical solutions of the present disclosure will be further described in detail below through embodiments with reference to accompanying drawings. In the specification, the same or similar reference numerals represent the same or similar components. The following descriptions of embodiments of the present disclosure with reference to the accompanying drawings are intended to explain a general inventive concept of the present disclosure, and should not be understood as a limitation to the present disclosure.

In addition, in the following detailed descriptions, for the convenience of description, many specific details are set forth to provide comprehensive understanding of embodiments of the present disclosure. Clearly, one or more embodiments may also be implemented without these specific details.

It will be understood that, although the terms "first," "second" and so on may be used here to describe different elements, these elements should not be limited by these terms. These terms are merely used to distinguish one element from another element. For example, without departing from the scope of the exemplary embodiments, a first element may be named as a second element, and similarly, the second element may be named as the first element. The term "and/or" as used here includes any and all combinations of one or more related listed items.

The terms used herein are merely for a purpose of describing specific embodiments, and are not intended to limit exemplary embodiments. As used herein, unless otherwise specified in the context, a singular form is also intended to include a plural form. It should also be understood that when terms "containing" and/or "including" are used herein, it means that the described features, wholes, steps, operations, elements and/or components are provided, but do not exclude the presence or addition of one or more other features, wholes, steps, operations, elements, components and/or combinations thereof.

Herein, unless otherwise specified, the expression "vehicle" includes movable means of transportation, including but not limited to two-wheeled motor vehicles, three-wheeled motor vehicles, four-wheeled motor vehicles, trains, etc.

The expression "light intensity", also known as illumination intensity, refers to a luminous flux of visible light received per unit area, measured in lux (or lx), which is used to indicate an intensity of illumination and a degree to which a surface area of an object is illuminated.

The inventors have found through research that, with the development of automotive intelligence, electrification and connectivity, smart cockpit technology has become a major part of automobiles. An important component of the smart cockpit is vehicle glass, including front and rear windshield glass sheets, sunroofs, side window glass sheets, and sun visors. With the development of technology and the continuous improvement of user demands, the vehicle glass needs to have more and more functions. For example, in addition to a conventional light transmission function, the vehicle glass also needs to have functions such as displaying images and interacting with users. The vehicle glass with display, interaction, and other functions requires a comprehensive use of thin-film transistor array, display control, multi-color pixel and other technologies. Therefore, a cost of such vehicle glass is higher than that of conventional vehicle glass. In order to meet user demands while balancing costs, a currently practical technical direction is the use of dimming glass. That is, dimming glass may be applied in vehicles to achieve the functions of displaying images and interacting with users in addition to the conventional light transmission function.

Technologies used in dimming glass may include PDLC (polymer dispersed liquid crystal), EC (electrochromic) and SPD (suspended particle device) technologies.

PDLC dimming glass was put into mass production early, with relatively low cost, and may achieve both transparency and frosted effects. In a power-on state, polymer dispersed liquid crystal molecules may be arranged in order and light may pass directly through the glass; whereas in a power-off state, the polymer dispersed liquid crystal molecules may be arranged in disorder and light may be scattered to form a frosted effect. The PDLC dimming glass generally has a whitish color and may present soft natural light after being frosted.

In SPD dimming glass, suspended particles may absorb more than 99% of visible light. In a power-off state, the glass may be in a frosted state; in a power-on state, the suspended particles may become oriented (in order) to allow light to pass through. The SPD dimming glass enables a continuous adjustment of light. Due to characteristics of suspended particles, the SPD dimming glass requires a voltage of 110V and thus more comprehensive safety measures, which directly increases costs. The SPD dimming glass is generally blue and looks different from the PDLC glass.

In EC dimming glass, a light transmittance of the glass may be adjusted using color changes caused by materials and electric fields. The EC dimming glass consists of three portions including an ion storage layer, a solid electrolyte and an electrochromic layer, and has characteristics of low voltage, low frosting level and power-off memory. Under an action of the electric field, a reflectivity, a transmittance and an absorptivity of the electrochromic layer may change, thereby altering light passing through the glass. In terms of color, the EC dimming glass mainly comes in gray or blue.

In embodiments of the present disclosure, the dimming glass may include a dye liquid crystal dimming glass.

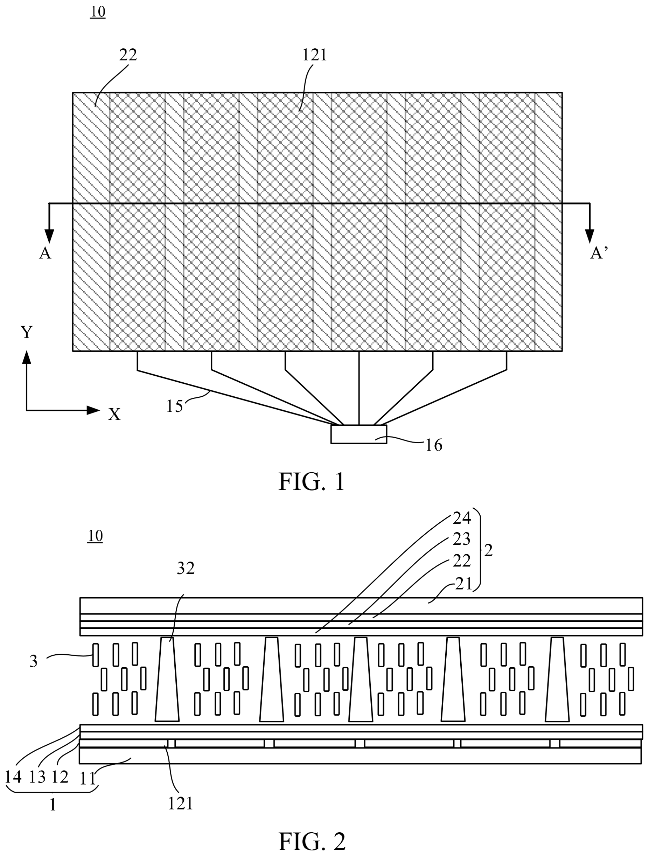

FIG. 1 shows a schematic plan view of a dimming glass sheet according to some exemplary embodiments of the present disclosure. FIG. 2 shows a cross-sectional view of the dimming glass sheet taken along line AA' in FIG. 1 according to some exemplary embodiments of the present disclosure.

Referring to FIG. 1 and FIG. 2, a dimming glass sheet 10 may include a first dimming substrate 1 and a second dimming substrate 2 arranged opposite to each other, and a dimming component 3 interposed between the first dimming substrate 1 and the second dimming substrate 2.

The first dimming substrate 1 may include a first base substrate 11, a first electrode 12, a first insulation layer 13, and a first alignment layer 14. The first electrode 12, the first insulation layer 13 and the first alignment layer 14 are sequentially arranged on the first base substrate 11.

The second dimming substrate 2 may include a second base substrate 21, a second electrode 22, and a second alignment layer 24. The second electrode 22 and the second alignment layer 24 are sequentially arranged on the second base substrate 21.

The dimming glass sheet 10 may further include spacers 32 to provide support. Optionally, the spacer 32 may be a spherical spacer 32, a columnar spacer 32, or a spacer 32 of other shapes. The spacer 32 may be made of a transparent material or a non-transparent material.

For example, the first base substrate 11 and the second base substrate 21 may be transparent glass substrates. For example, the dimming glass sheet 10 may be applied to fields such as architecture, transportation and interior design to achieve switching between a transparent state and a non-transparent state (such as a dark state or a frosted state) and thus a continuous change in the transparency of the glass.

For example, the first electrode 12 and the second electrode 22 may be transparent electrodes, which may be made of, for example, a transparent conductive material such as indium tin oxide (ITO).

In some embodiments of the present disclosure, the dimming component 3 may include a liquid crystal layer. For example, the liquid crystal layer may include dye liquid crystals. Specifically, the liquid crystal layer may include liquid crystal molecules and color dye molecules mixed with the liquid crystal molecules. For example, the color dye molecules may be dichroic dye molecules.

The first electrode 12 of the first dimming substrate 1 includes a plurality of first sub-electrodes 121. The plurality of first sub-electrodes 121 are arranged on the first base substrate 11 at intervals. That is, an orthographic projection of the first electrode 12 on the first base substrate 11 is in a shape of a plurality of strips arranged at intervals. It will be understood that each first sub-electrode 121 is transparent. For example, each first sub-electrode 121 is made of a transparent conductive material such as ITO.

Referring to FIG. 1 and FIG. 2, the dimming glass sheet 10 may further include a plurality of wires 15 arranged on the first base substrate 11. In an example, the plurality of wires may correspond to the plurality of first sub-electrodes 121, respectively. For example, each wire may be a conductive wire made of a conductive material.

Referring to FIG. 1 and FIG. 2, the dimming glass sheet 10 may further include a driving circuit 16 such as an IC, and the driving circuit 16 is used to provide an electrical signal. Specifically, each of the plurality of wires may electrically connect a respective one of the first sub-electrodes 121 to the driving circuit 16 such as an IC, so that control signals provided by the driving circuit 16 may be provided to the plurality of first sub-electrodes 121, respectively.

The second electrode 22 of the second dimming substrate 2 may be a planar electrode, that is, an orthographic projection of the second electrode 22 on the second base substrate 21 has a continuously distributed planar shape. For example, in the embodiment shown in FIG. 1, the orthographic projection of the second electrode 22 on the second base substrate 21 is in a shape of a complete rectangle.

In an example, as shown in FIG. 1, the orthographic projection of the first electrode 12 on the first base substrate 11 falls within the orthographic projection of the second electrode 22 on the first base substrate 11.

It will be understood that the second electrode 22 may also be electrically connected to the driving circuit 16 such as an IC through a conductive structure (such as a wire), so that the control signal provided by the driving circuit 16 may be provided to the second electrode 22.

In the dimming glass sheet provided in the embodiments of the present disclosure, when no voltage is applied to the first electrode 12 and the second electrode 22, no electric field is generated between the first electrode 12 and the second electrode 22, and the liquid crystal molecules and the color dye molecules in the dimming component 3 are vertically oriented and do not absorb light, so that the dimming glass sheet is in a light-transmitting state (i.e., a completely transparent state). When predetermined voltages are applied to the first electrode 12 and the second electrode 22, an electric field is generated between the first electrode 12 and the second electrode 22, and the liquid crystal molecules and the color dye molecules in the liquid crystal layer 3 are deflected, then the liquid crystal molecules are horizontally oriented under the electric field, and the color dye molecules are induced to be arranged horizontally to absorb light, so that the dimming glass sheet is in an opaque state (i.e., completely dark state), or the dimming glass sheet has a transparency between a completely dark state and a completely transparent state.

In such embodiments, the dimming glass sheet provided in the embodiments of the present disclosure is described by taking dye liquid crystals as an example. It will be understood that the dimming glass sheet provided in the embodiments of the present disclosure is not limited to a dye liquid crystal dimming glass sheet, and may also include other types of dimming glass sheets, including but not limited to PDLC dimming glass sheet, SPD dimming glass sheet, EC dimming glass sheet, etc.

The inventors have found that a vehicle typically has at least three driving modes, namely a Sport mode, a Normal mode, and an ECO mode. The Sport mode is characterized by a more aggressive driving style, better power performance, and higher speed. The Sport mode enables the vehicle to instantly unleash greater power by increasing engine speed or rapidly downshifting. The Normal mode is also referred to as a Comfort mode or a Casual mode, which aims to maintain consistent power output while achieving improved fuel economy. Under control in the Normal mode, the vehicle's throttle response is most balanced, and the handling is simpler and more comfortable, making the vehicle easier to drive. The ECO mode is also referred to as an Economy mode, which enables a more economical and fuel-efficient driving style suitable for daily commuting. In the ECO mode, the engine speed is controlled through appropriate gear shifting, thereby reducing unnecessary fuel consumption and achieving economical fuel use.

In the embodiments of the present disclosure, the dimming glass technology is applied to vehicles. Specifically, at least one of a front windshield glass sheet, a rear windshield glass sheet, a sunroof glass sheet, a side window glass sheet, and a sun visor glass sheet of the vehicle may employ the dimming glass sheet described above. Based on this, by adjusting the light transmittance of the dimming glass sheet, it is possible to achieve effects of providing safety and protecting privacy. For example, in scenarios such as vehicle turning, lane changing, or high-speed driving, the light transmittance of the dimming glass sheet may be increased, allowing the driver to observe the external environment more clearly, thereby improving driving safety. In scenarios where an occupant inside the vehicle is resting or another vehicle is present at a periphery of the vehicle, the light transmittance of the dimming glass sheet may be decreased, thereby enhancing the privacy protection for the occupant inside the vehicle.

On one hand, improving safety requires increasing the light transmittance of the dimming glass sheet; on the other hand, protecting privacy requires decreasing the light transmittance of the dimming glass sheet. The two requirements for the dimming glass sheet are opposite. How to intelligently adjust the dimming glass sheet to meet user needs for both improving the safety and protecting the privacy is one of the problems that needs to be solved regarding the dimming glass applied in vehicles.

The embodiments of the present disclosure provide a method for controlling a dimming glass system for a vehicle and the system. The control method includes: acquiring a vehicle driving mode selected by a user from preset m vehicle driving modes, where m is a positive integer greater than or equal to 2; determining, according to a mapping relationship between vehicle driving modes and dimming modes, a dimming mode corresponding to the vehicle driving mode selected by the user, where the mapping relationship between the vehicle driving modes and the dimming modes includes a mapping relationship between the preset m vehicle driving modes and n dimming modes; and controlling the dimming glass system of the vehicle according to the dimming mode.

In embodiments of the present disclosure, dimming modes of the dimming glass sheet may be set to be different from each other according to different vehicle driving modes, which may balance the needs for improving the safety and protecting the privacy, thereby providing an improved driving and riding experience for the user.

It will be noted that, unless otherwise specified herein, the term "light transmittance adjustment information" includes at least one of: adjusting a magnitude of the light transmittance or adjusting a rate of change of the light transmittance.

It will be noted that, unless otherwise specified herein, the expression "controlling the dimming glass system of the vehicle" includes: control of the light transmittance of the dimming glass sheet, selection and control of the glass sheet to be adjusted, zonal control of the dimming glass sheet, and so on.

Embodiments of the present disclosure will be described in further details below with reference to the accompanying drawings.

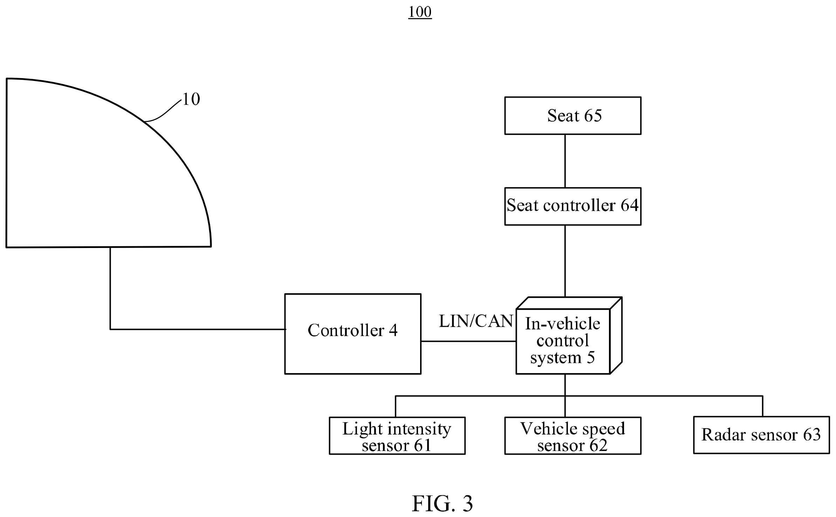

In some embodiments of the present disclosure, a dimming glass system for a vehicle is provided. FIG. 3 shows a schematic structural diagram of a dimming glass system for a vehicle according to an exemplary embodiment of the present disclosure. Referring to FIG. 1 to FIG. 3, the dimming glass system 100 includes a dimming glass sheet 10 and a controller 4. The dimming glass sheet may be implemented based on one or more of the embodiments shown in FIG. 1 to FIG. 2, and is mounted on the vehicle. The controller 4 is electrically connected to the first electrode 12 and the second electrode 22 of the dimming glass sheet 10. For example, the controller 4 may be further connected to an in-vehicle control system 5 of the vehicle. The controller 4 may be connected to the in-vehicle control system 5 of the vehicle via a LIN or CAN bus.

For example, in the embodiments shown in FIG. 3, a light intensity sensor 61, a vehicle speed sensor 62, a radar sensor 63 and a seat controller 64 that are connected to the in-vehicle control system 5, and a seat 65 connected to the seat controller 64 are schematically illustrated.

An operation process of the controller 4 will be further described below in conjunction with the specific control method.

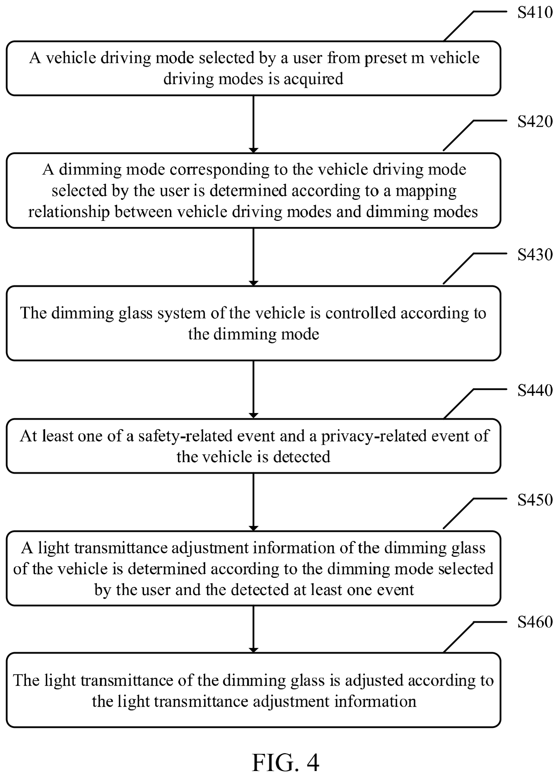

FIG. 4 shows a flowchart of a method for controlling a dimming glass system according to some exemplary embodiments of the present disclosure. The control method includes steps S410 to S460.

In step S410, a vehicle driving mode selected by a user from preset m vehicle driving modes is acquired, where m is a positive integer greater than or equal to 2.

In step S420, a dimming mode corresponding to the vehicle driving mode selected by the user is determined according to a mapping relationship between vehicle driving modes and dimming modes, where the mapping relationship between the vehicle driving modes and the dimming modes includes a mapping relationship between the preset m vehicle driving modes and n dimming modes, where n is a positive integer greater than or equal to 2.

In some embodiments, m may be equal to n, i.e., the number of vehicle driving modes is the same as the number of dimming modes, and each of the m vehicle driving modes may correspond to a respective one of the n dimming modes. In such embodiments, a respective dimming mode may be determined for each vehicle driving mode, which is conducive to customizing a dimming mode for each vehicle driving mode and achieving a personalized customization of the dimming mode in each vehicle driving mode.

In some embodiments, m may be greater than n, i.e., the number of vehicle driving modes is greater than the number of dimming modes. For example, the vehicle may include three vehicle driving modes, namely a Sport mode, a Normal mode and an ECO mode, while the vehicle may include two dimming modes. For example, the Sport mode corresponds to one dimming mode, and the Normal mode and the ECO mode may share the other dimming mode. In such embodiments, two or more of the vehicle driving modes may share a dimming mode, which may reduce the number of dimming modes and facilitate user operation.

In some embodiments, m may be less than n, i.e., the number of vehicle driving modes is less than the number of dimming modes. For example, the vehicle may include three vehicle driving modes, namely a Sport mode, a Normal mode and an ECO mode, while the vehicle may include four dimming modes. For example, the Sport mode may correspond to two dimming modes, and the Normal mode and the ECO mode may each correspond to one dimming mode. In such embodiment, some vehicle driving mode may correspond to two or more dimming modes, enabling finer control of the dimming modes in that vehicle driving modes, which is conducive to satisfying diverse user demands.

In step S430, the dimming glass system of the vehicle is controlled according to the dimming mode.

In some exemplary embodiments of the present disclosure, each of the n dimming modes has a respective fixed light transmittance or a respective light transmittance ranges. That is, each of the n dimming modes corresponds to a fixed light transmittance or light transmittance range. After a specific vehicle driving mode is selected by the user, a dimming mode mapped to that vehicle driving mode is determined, and the fixed light transmittance or light transmittance range corresponding to that dimming mode is then determined accordingly.

In such embodiments, in step S430, controlling the dimming glass system of the vehicle according to the dimming mode includes: controlling the dimming glass system of the vehicle according to the fixed light transmittance or the fixed light transmittance range of the dimming mode.

In some exemplary embodiments, the m vehicle driving modes include a first vehicle driving mode. For example, the first vehicle driving mode may be the Sport mode. In such embodiments, the n dimming modes include a first dimming mode, and the mapping relationship between the vehicle driving modes and the dimming modes includes a mapping relationship between the first vehicle driving mode and the first dimming mode.

In some exemplary embodiments, the m vehicle driving modes further include a second driving mode. For example, the second driving mode may be the Normal mode. In such embodiments, the n dimming modes further include a second dimming mode, and the mapping relationship between the vehicle driving modes and the dimming modes further includes a mapping relationship between the second vehicle driving mode and the second dimming mode.

In some exemplary embodiments, the light transmittance or light transmittance range in the first dimming mode is higher than that in the second dimming mode. Through such a design, the light transmittance in the Sport mode may be higher than that in the Normal mode, thereby ensuring both the safety in the Sport mode and the privacy protection in the Normal mode.

In some exemplary embodiments, the m vehicle driving modes further include a third driving mode. For example, the third driving mode may be the ECO mode. In such embodiments, the n dimming modes further include a third dimming mode, and the mapping relationship between the vehicle driving modes and the dimming modes further includes a mapping relationship between the third vehicle driving mode and the third dimming mode.

In some exemplary embodiments, the light transmittance or light transmittance range in the third dimming mode lies between that in the first dimming mode and that in the second dimming mode.

In step S440, at least one of a safety-related event and a privacy-related event of the vehicle is detected.

In step S450, a light transmittance adjustment information of the dimming glass sheet of the vehicle is determined according to the dimming mode selected by the user and the detected at least one event.

In step S460, the light transmittance of the dimming glass sheet is adjusted according to the light transmittance adjustment information.

In the embodiments of the present disclosure, in at least two of the n dimming modes, a priority of the safety-related event is different from a priority of the privacy-related event.

In some exemplary embodiments, the m vehicle driving modes include a first vehicle driving mode. For example, the first vehicle driving mode may be the Sport mode. In such embodiments, the n dimming modes include a first dimming mode, and the mapping relationship between the vehicle driving modes and the dimming modes includes a mapping relationship between the first vehicle driving mode and the first dimming mode. In the first dimming mode, a priority of each safety-related event is higher than a priority of the privacy-related event.

In some exemplary embodiments, the m vehicle driving modes further include a second driving mode. For example, the second driving mode may be the Normal mode. In such embodiments, the n dimming modes further include a second dimming mode, and the mapping relationship between the vehicle driving modes and the dimming modes further includes a mapping relationship between the second vehicle driving mode and the second dimming mode. In the second dimming mode, the priority at least part of the privacy-related event is higher than that of at least part of the safety-related event.

In some exemplary embodiments, the m vehicle driving modes include a third vehicle driving mode. For example, the third vehicle driving mode may be the ECO mode. In such embodiments, the n dimming modes include a third dimming mode, and the mapping relationship between the vehicle driving modes and the dimming modes includes a mapping relationship between the third vehicle driving mode and the third dimming mode. In the third dimming mode, the priority of each safety-related event is higher than the priority of the privacy-related event, or the priority of the safety-related event may be at the same level as the priority of the privacy-related event.

Table 1 exemplarily illustrates the priorities and consideration factors in different vehicle driving modes. Referring to Table 1 in conjunction with FIG. 4, by way of example, the first vehicle driving mode may be the Sport mode, the second vehicle driving mode may be the Normal mode, and the third vehicle driving mode may be the ECO mode. The safety-related event include at least one selected from: vehicle turning, lane changing, or a vehicle speed exceeding a speed threshold. The privacy-related event include at least one selected from: a passenger inside the vehicle being in a resting state, or another vehicle being present at a periphery of the vehicle. For example, "another vehicle being present at a periphery of the vehicle" may include at least one situation selected from: for a moving vehicle, another vehicle traveling in parallel in an adjacent lane; or for a parked vehicle in a parking space, another vehicle parked side by side in an adjacent parking space.

In the first vehicle driving mode (i.e., the Sport mode), since the driving style of the vehicle is relatively aggressive, the priority of safety is increased. As shown in Table 1, the priority of the safety-related event is higher than that of the privacy-related event. In the second vehicle driving mode (i.e., the Normal mode), as the user pursues a relatively comfortable driving and riding experience, the priority of part of privacy-related event is increased. As shown in Table 1, the priority of part of safety-related event is lower than the priority of the privacy-related event.

**Table 1**

| Driving Mode | Priority | Consideration Factors |
|---|---|---|
| Sport Mode | Safety > Privacy Protection | Safety-related events (e.g., turning, vehicle speed); Privacy-related events (e.g., occupant resting, nearby vehicle) |
| Normal Mode | Partial Safety < Privacy Protection | Privacy-related events (e.g., occupant resting, nearby vehicle); Safety-related events (e.g., vehicle turning, speed) |
| ECO mode | Safety > Privacy Protection, or Safety = Privacy Protection | Partial safety-related events (e.g., turning) |

In such embodiments, by setting different priorities for the safety-related event or for privacy-related event according to different vehicle driving modes, the user requirements for improving the safety and protecting the privacy may be balanced, thereby providing an improved driving and riding experience for the user.

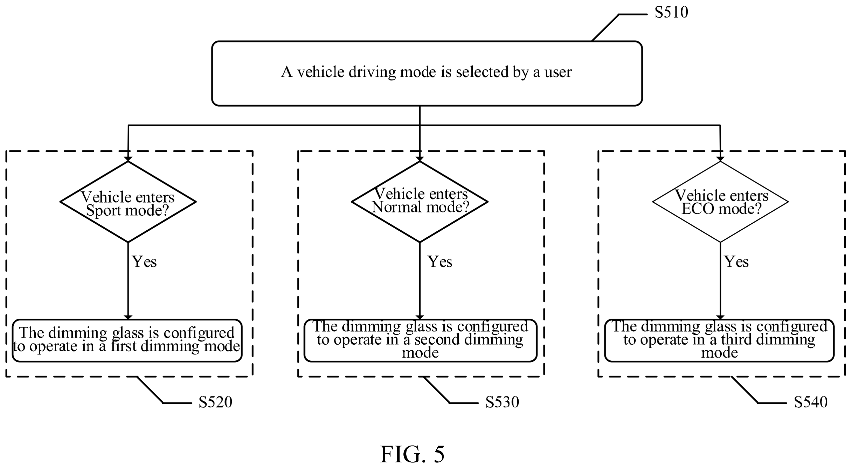

FIG. 5 shows a flowchart of a method for controlling a dimming glass system according to some exemplary embodiments of the present disclosure. The control method includes steps S510 to S540.

In step S510, a vehicle driving mode is selected by a user.

Specifically, the in-vehicle control system of the vehicle may provide a user selection interface, allowing the user to set different dimming modes for different vehicle driving modes. The in-vehicle control system may establish a mapping relationship between the vehicle driving modes and the dimming modes. For example, in different dimming modes, an initial light transmittance of the dimming glass sheet may be set differently. Specifically, the initial light transmittance of the dimming glass sheet in different dimming modes may be set by sliding a dimming glass sheet control bar or rotating a dimming glass sheet control knob.

In step S520, when the Sport mode is selected by the user, the dimming glass sheet is configured to operate in a first dimming mode. For example, in the first dimming mode, the initial light transmittance of the dimming glass sheet is relatively high to provide a better visibility.

In step S530, when the Normal mode is selected by the user, the dimming glass sheet is configured to operate in a second dimming mode. For example, in the second dimming mode, the initial light transmittance of the dimming glass sheet is relatively low, such as lower than the initial light transmittance of the dimming glass sheet in the first dimming mode, to provide a better privacy protection.

In step S540, when the ECO mode is selected by the user, the dimming glass sheet is set to operate in a third dimming mode. For example, in the third dimming mode, the initial light transmittance of the dimming glass sheet is moderate, such as between the initial light transmittance in the first dimming mode and the initial light transmittance in the second dimming mode.

Based on the above, in some exemplary embodiments of the present disclosure, the control method may further include: determining the initial light transmittance of the dimming glass sheet according to the determined dimming mode. For example, the initial light transmittance in the first dimming mode is higher than that in the second dimming mode, and the initial light transmittance in the third dimming mode lies between that in the first dimming mode and that in the second dimming mode.

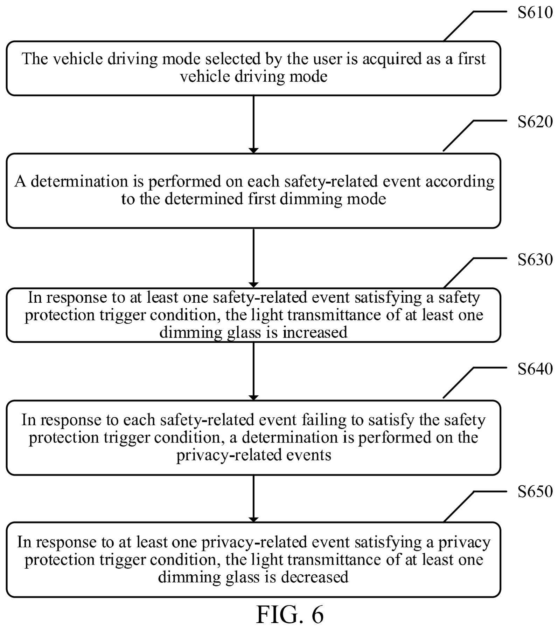

FIG. 6 shows a flowchart of a method for controlling a dimming glass system in the Sport mode according to some exemplary embodiments of the present disclosure. In the Sport mode, the control method includes steps S610 to S650.

Referring to FIG. 6, in step S610, the vehicle driving mode selected by the user is acquired as a first vehicle driving mode, i.e., the Sport mode.

In the Sport mode, a priority of each safety-related event is higher than a priority of the privacy-related event. In such embodiments, a detection and determination are first performed on the safety-related event.

In step S620, a determination is performed on each safety-related event according to the determined first dimming mode.

In step S630, in response to at least one safety-related event satisfying a safety protection trigger condition, the light transmittance of at least one dimming glass sheet is increased.

Then, after the determination is performed on each safety-related event, a detection and determination may be performed on the privacy-related event.

In step S640, in response to each safety-related event failing to satisfy the safety protection trigger condition, a determination is performed on the privacy-related event.

In step S650, in response to at least one privacy-related event satisfying a privacy protection trigger condition, the light transmittance of at least one dimming glass sheet is decreased.

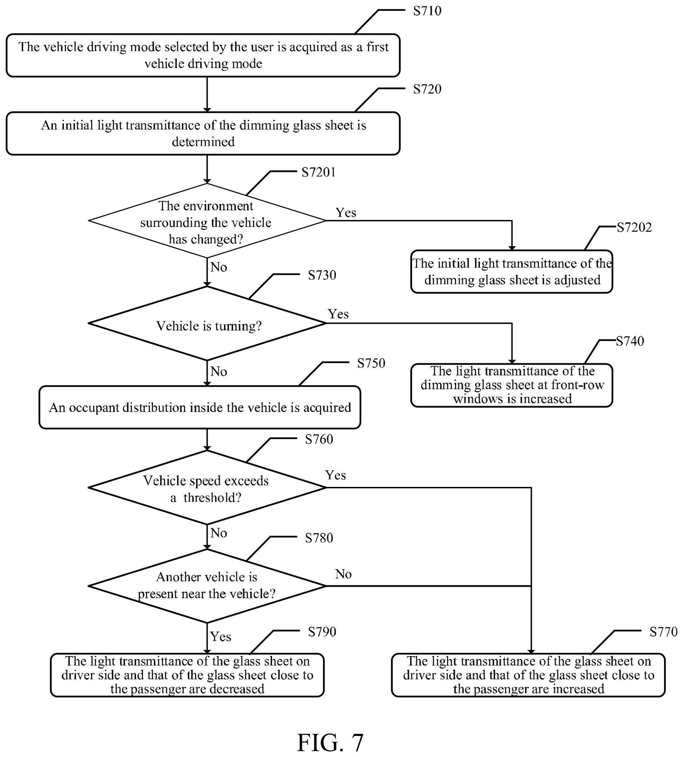

FIG. 7 shows an exemplary flowchart of a method for controlling a dimming glass system in the Sport mode according to some exemplary embodiments of the present disclosure. In the Sport mode, the control method includes steps S710 to S790.

Referring to FIG. 7, in step S710, the vehicle driving mode selected by the user is acquired as a first vehicle driving mode, i.e., the Sport mode.

In the Sport mode, the priority of each safety-related event is higher than the priority of the privacy-related event. In such embodiments, a detection and determination are first performed on the safety-related event.

In step S730, a determination is performed on a first safety-related event according to the determined first dimming mode. For example, the first safety-related event may be vehicle turning. That is, in this step, it may be determined whether the vehicle is turning.

In step S740, in response to the first safety-related event satisfying a safety protection trigger condition, the light transmittance of at least one dimming glass sheet is increased. For example, in response to the vehicle turning, the light transmittance of the dimming glass sheets at front-row side windows of the vehicle is increased. In this way, the driving safety during turning may be improved.

In step S760, in response to the first safety-related event failing to satisfy the safety protection trigger condition, a determination is performed on a second safety-related event. For example, the second safety-related event may be the vehicle speed exceeding a speed threshold. In this step, in response to the vehicle not turning, it is determined whether the vehicle speed exceeds a preset speed threshold.

In step S770, in response to the second safety-related event satisfying a safety protection trigger condition, the light transmittance of at least one dimming glass sheet is increased. For example, in response to the vehicle speed exceeding the speed threshold, i.e., the vehicle driving at a high speed, the light transmittance of the dimming glass sheets at front-row side windows of the vehicle and the light transmittance of the dimming glass sheet at a side window close to a passenger are increased. In this way, driving safety during high-speed travel may be improved.

In step S780, in response to the second safety-related event failing to satisfy the safety protection trigger condition, a determination is performed on at least one privacy-related event. For example, in response to the vehicle speed not exceeding the speed threshold, it may be determined whether another vehicle is present at a periphery of the vehicle.

In step S790, in response to the at least one privacy-related event satisfying a privacy protection trigger condition, the light transmittance of at least one dimming glass sheet is decreased. For example, in response to another vehicle being present at a periphery of the vehicle, the light transmittance of at least one dimming glass sheet may be decreased. For example, the light transmittance of the dimming glass sheets at front-row side windows of the vehicle may be decreased, and the light transmittance of the dimming glass sheet at a side window close to a passenger may be decreased. In this way, the privacy of occupants inside the vehicle may be protected.

In embodiments of the present disclosure, in the Sport mode, since the driving style is relatively aggressive, the safety-related event is given priority, while the privacy protection is also considered under the premise of ensuring the driving safety, thereby achieving the effects of enhancing the safety and protecting the privacy simultaneously.

With continued reference to FIG. 7, optionally, in some exemplary embodiments of the present disclosure, in step S720, the initial light transmittance of the dimming glass sheet may be determined according to the first dimming mode and an environment surrounding the vehicle. For example, the initial light transmittance of the dimming glass sheet may be determined according to the first dimming mode in combination with environmental factors such as weather conditions, light intensity, and time of day.

With continued reference to FIG. 7, optionally, in some exemplary embodiments of the present disclosure, the control method may further include steps S7201 and S7202. In step S7201, it is continuously detected whether the environment surrounding the vehicle has changed. For example, it may be continuously detected whether environmental factors such as weather conditions, light intensity, or time of day has changed. In step S7202, in response to a change occurring in the environment surrounding the vehicle, the initial light transmittance of the dimming glass sheet is adjusted.

With continued reference to FIG. 7, optionally, in some exemplary embodiments of the present disclosure, in step S750, an occupant distribution inside the vehicle is acquired.

In steps S770 and S790, the dimming glass sheet that requires a light transmittance adjustment may be determined according to the occupant distribution inside the vehicle.

For example, increasing the light transmittance of at least one dimming glass sheet in response to the first safety-related event satisfying the safety protection trigger condition includes: in response to the first safety-related event satisfying the safety protection trigger condition, increasing the light transmittance of the dimming glass sheets at front-row side windows of the vehicle.

For example, increasing the light transmittance of at least one dimming glass sheet in response to the second safety-related event satisfying the safety protection trigger condition includes: in response to the second safety-related event satisfying the safety protection trigger condition, increasing the light transmittance of the dimming glass sheet at a driver-side window of the vehicle and the light transmittance of the dimming glass sheet at a side window close to passengers in the vehicle.

For example, decreasing the light transmittance of at least one dimming glass sheet includes: decreasing the light transmittance of the dimming glass sheet at the driver-side window of the vehicle and the light transmittance of the dimming glass sheet at a side window close to passengers in the vehicle.

In some embodiments of the present disclosure, the light transmittance of the dimming glass sheet close to positions of occupants inside the vehicle may be adjusted according to the occupant distribution inside the vehicle. For example, when a passenger is seated at the rear-row-left position of the vehicle, the glass sheet at the rear-row-left window may be determined as the glass sheet that requires a light transmittance adjustment; when a passenger is seated at the rear-row-right position of the vehicle, the glass sheet at the rear-row-right window may be determined as the glass sheet that requires a light transmittance adjustment; when a passenger is seated at the rear-row-center position of the vehicle, the glass sheet at both rear-row windows may be determined as the glass sheet that requires a light transmittance adjustment.

In some embodiments of the present disclosure, when adjusting the light transmittance according to the occupant distribution inside the vehicle, environmental factors such as weather conditions and light intensity should also be taken into account. For example, in a mode intended for sun shading, "determining the light transmittance according to the occupant distribution" may include adjusting the light transmittance so that the glass close to occupants inside the vehicle has a low transmittance, thereby reducing external light exposure to occupants inside the vehicle. In certain modes designed to protect safe driving, for example, to avoid strong external light from dazzling the driver, the light transmittance of the driver-side window glass may be decreased. In a mode intended to facilitate occupants' observation of the external environment, for instance, enabling the driver to better observe surrounding vehicles when exiting a dimly lit underground garage, or allowing rear-seat passengers to more easily enjoy scenic views during travel, the light transmittance of the glass close to occupants inside the vehicle may be increased.

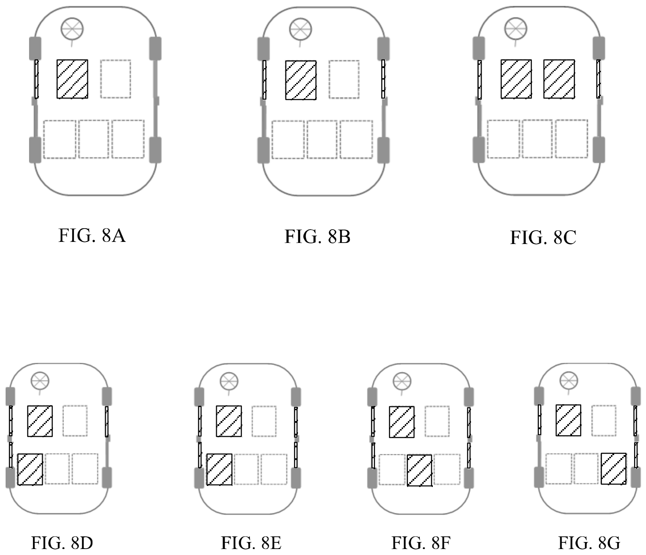

FIG. 8A to FIG. 8G schematically show a correspondence between an occupant distribution inside the vehicle and a dimming control of glass. In FIG. 8A to FIG. 8G, a seat represented by a box filled with 45° diagonal lines indicates that an occupant is present at that position, and a side window represented by a box filled with 45° diagonal lines indicates that the side window requires dimming control.

For example, referring to FIG. 8A, when only the driver is present in the window and no other passenger is on board, if the vehicle speed is greater than the speed threshold, the light transmittance of the dimming glass sheet at the driver-side window may be increased only. Referring to FIG. 8B, when only the driver is present in the window and no other passenger is on board, if the vehicle speed is greater than the speed threshold, the light transmittance of the dimming glass sheets at both front-row side windows may be increased. Referring to FIG. 8C, when both the driver and a front passenger are present in the vehicle, if the vehicle speed is greater than the speed threshold, the light transmittance of the dimming glass sheets at both front-row side windows may be increased. Referring to FIG. 8D, when the driver and a rear-left passenger are present in the vehicle, if the vehicle speed is greater than the speed threshold, the light transmittance of the dimming glass sheets at both front-row side windows and the light transmittance of the dimming glass sheet at the rear-row-left window may be increased. Referring to FIG. 8E, when the driver and the rear-row-left passenger are present in the window, if another vehicle is present at the periphery of the vehicle, the light transmittance of the dimming glass sheets at both front-row side windows and the light transmittance of the dimming glass sheets at both rear side windows may be decreased to protect privacy. Referring to FIG. 8F, when the driver and a rear- row-center passenger are present in the vehicle, if another vehicle is present at the periphery of the vehicle, the light transmittance of the dimming glass sheets at both front-row side windows and the light transmittance of the dimming glass sheets at both rear-row side windows may be decreased to protect privacy. Referring to FIG. 8G, when the driver and a rear-row-right passenger are present in the vehicle, if another vehicle is present at the periphery of the vehicle, the light transmittance of the dimming glass sheets at both front-row side windows and the light transmittance of the dimming glass sheet at the rear-row-right window may be decreased to protect privacy.

Optionally, in some exemplary embodiments, the control method may further include: in response to the vehicle turning toward a side where a front passenger seat is located, controlling the front passenger seat to move backward. For example, in the above step S730, it is determined whether the vehicle is turning right; and in the above step S740, in response to the vehicle turning right, the light transmittance of the dimming glass sheets at both front-row side windows may be increased, and the front passenger seat may be controlled to move backward to avoid interfering with the driver's line of sight.

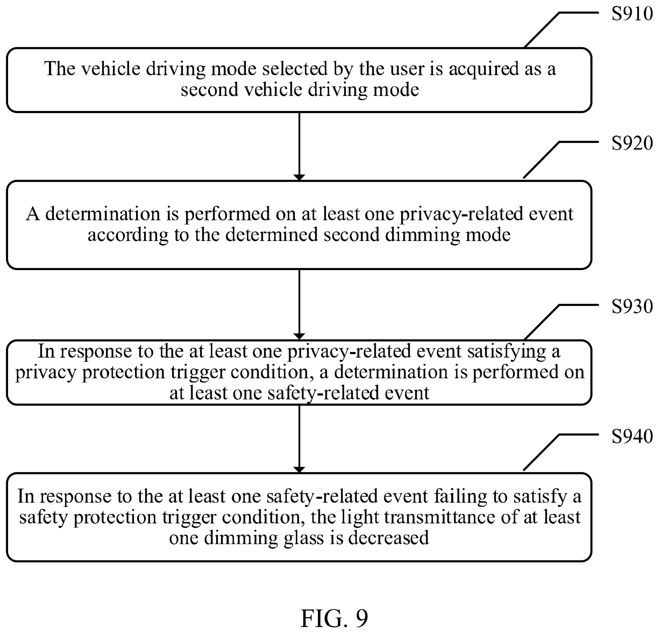

FIG. 9 shows a flowchart of a method for controlling a dimming glass system in the Normal mode according to some exemplary embodiments of the present disclosure. In the Normal mode, the control method includes steps S910 to S940.

Referring to FIG. 9, in step S910, the vehicle driving mode selected by the user is acquired as a second vehicle driving mode, i.e., the Normal mode.

In the Normal mode, the priority of part of the safety-related event is lower than the priority of the privacy-related event.

In step S920, a determination is performed on at least one privacy-related event according to the determined second dimming mode.

In step S930, in response to the at least one privacy-related event satisfying a privacy protection trigger condition, a determination is performed on at least one safety-related event.

In step S940, in response to the at least one safety-related event failing to satisfy a safety protection trigger condition, the light transmittance of at least one dimming glass sheet is decreased.

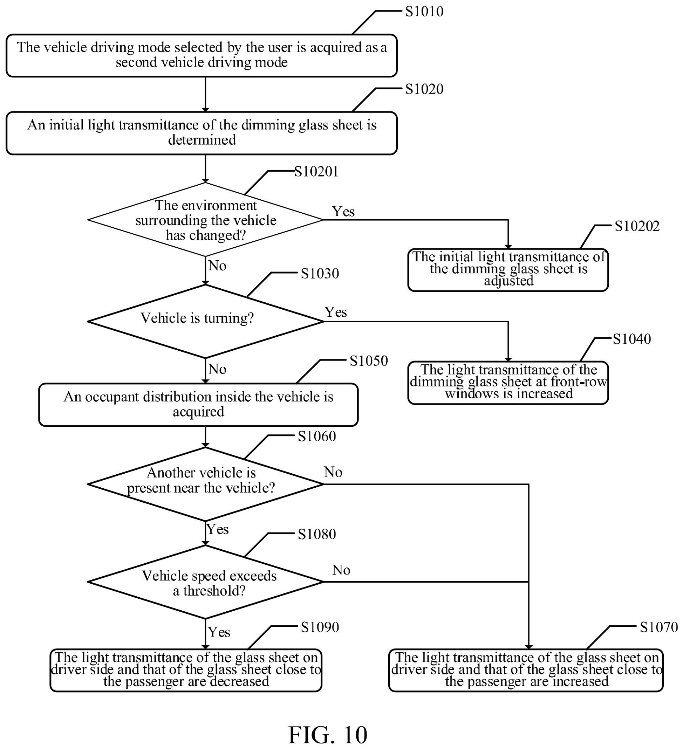

FIG. 10 shows an exemplary flowchart of a method for controlling a dimming glass system in the Normal mode according to some exemplary embodiments of the present disclosure. In the Normal mode, the control method includes steps S1010 to S1090.

Referring to FIG. 10, in step S1010, the vehicle driving mode selected by the user is acquired as a second vehicle driving mode, i.e., the Normal mode.

In the Normal mode, the priority of part of the safety-related events is lower than the priority of the privacy-related event.

In step S1030, a determination is performed on a first safety-related event according to the determined second dimming mode. For example, the first safety-related event may be vehicle turning. That is, in this step, it may be determined whether the vehicle is turning.

In step S1040, in response to the first safety-related event satisfying a safety protection trigger condition, the light transmittance of at least one dimming glass sheet is increased. For example, in response to the vehicle turning, the light transmittance of the dimming glass sheets at front-row side windows of the vehicle is increased. In this way, the driving safety during the turning may be improved.

In step S 1060, in response to the first safety-related event failing to satisfy the safety protection trigger condition, a determination is performed on at least one privacy-related event. For example, the at least one privacy-related event includes whether another vehicle is present at the periphery of the vehicle. In this step, in response to the vehicle not turning, it is determined whether another vehicle is present at the periphery of the vehicle.

In step S1070, in response to the at least one privacy-related event failing to satisfy a privacy protection trigger condition, the light transmittance of at least one dimming glass sheet is increased. For example, in response to no other vehicle being present at the periphery of the vehicle, the light transmittance of the dimming glass sheets at front-row side windows of the vehicle and the light transmittance of the dimming glass sheet at a side window close to a passengers may be increased. In this way, the driving safety may be improved.

In step S1080, in response to the at least one privacy-related event satisfying the privacy protection trigger condition, a determination is performed on a second safety-related event. For example, in response to another vehicle being present at the periphery of the vehicle, it is determined whether the vehicle speed exceeds the speed threshold.

In step S 1070, in response to the second safety-related event satisfying a safety protection trigger condition, the light transmittance of at least one dimming glass sheet is increased. For example, in response to the vehicle speed exceeding the speed threshold, i.e., the vehicle driving at a high speed, the light transmittance of the dimming glass sheets at front-row side windows of the vehicle and the light transmittance of the dimming glass sheet at a side window close to the passenger are increased. In this way, the driving safety during the high-speed travel may be enhanced.

In step S1090, in response to the second safety-related event failing to satisfy the safety protection trigger condition, the light transmittance of at least one dimming glass sheet is decreased. For example, in response to the vehicle not driving at a high speed, the light transmittance of the dimming glass sheets at front-row side windows of the vehicle and the light transmittance of the dimming glass sheet at a side window close to the passenger are decreased. In this way, the privacy of occupants inside the vehicle may be protected.

In the embodiments of the present disclosure, in the Normal mode, since the driving style is relatively comfortable, it is possible to increase the priority of part of the privacy-related event while ensuring the safety. That is, the privacy protection is prioritized under the premise of ensuring the driving safety, thereby achieving a balance between improving the safety and protecting the privacy.

With continued reference to FIG. 10, optionally, in some exemplary embodiments of the present disclosure, in step S1020, an initial light transmittance of the dimming glass sheet is determined according to the second dimming mode and the environment surrounding the vehicle. For example, the initial light transmittance of the dimming glass sheet may be determined according to the second dimming mode in combination with environmental factors such as weather conditions, light intensity and time of day.

With continued reference to FIG. 10, optionally, in some exemplary embodiments of the present disclosure, the control method may further include steps S10201 and S10202. In step S10201, it is continuously detected whether the environment surrounding the vehicle has changed. For example, it may be continuously detected whether environmental factors such as weather conditions, light intensity, or time of day have changed. In step S10202, in response to a change occurring in the environment surrounding the vehicle, the initial light transmittance of the dimming glass sheet is adjusted.

With continued reference to FIG. 10, optionally, in some exemplary embodiments of the present disclosure, in step S1050, an occupant distribution inside the vehicle is acquired.

In steps S1070 and S1090, the dimming glass sheet that requires a light transmittance adjustment may be determined according to the occupant distribution inside the vehicle.

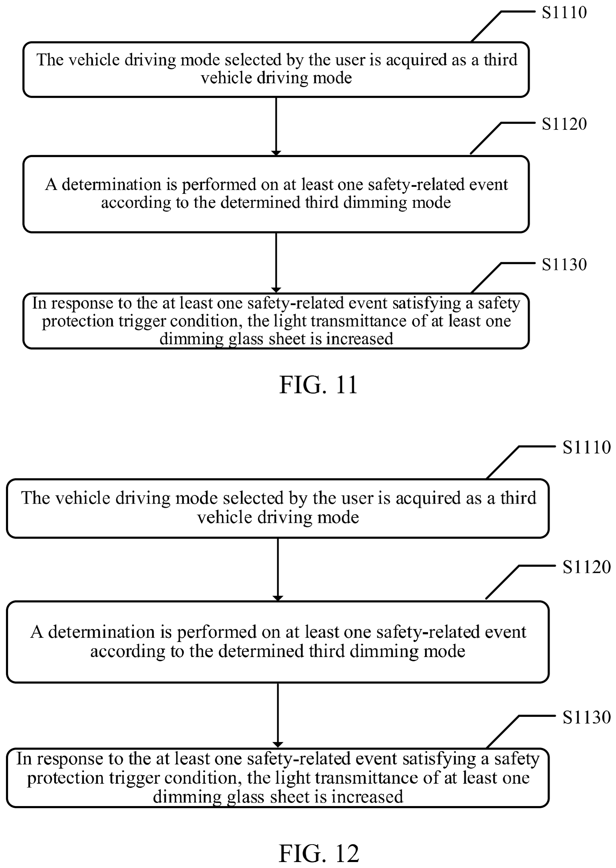

FIG. 11 shows a flowchart of a method for controlling a dimming glass system in the ECO mode according to some exemplary embodiments of the present disclosure. In the ECO mode, the control method includes steps S1110 to S1130.

Referring to FIG. 11, in step S1110, the vehicle driving mode selected by the user is acquired as a third vehicle driving mode, i.e., the ECO mode.

In step S1120, a determination is performed on at least one safety-related event according to the determined third dimming mode. For example, the at least one safety-related event may be vehicle turning. That is, in this step, it may be determined whether the vehicle is turning.

In step S1130, in response to the at least one safety-related event satisfying a safety protection trigger condition, the light transmittance of at least one dimming glass sheet is increased. For example, in response to the vehicle turning, the light transmittance of the dimming glass sheets at front-row side windows of the vehicle is increased. In this way, the driving safety during the turning may be improved.

Table 2 schematically illustrates measured data of light intensity distribution inside the vehicle under different opening and closing states of the sunroof. As shown in Table 2, the light intensity in the front row is almost unaffected by the opening and closing states of the sunroof, while the light intensity in the rear row is significantly affected by the opening and closing states of the sunroof. The light intensity distribution inside the vehicle is non-uniform, and the difference in light intensity between the front row and the rear row may reach up to sevenfold, resulting in a large difference in experience between the driver and passengers. In the front row, when the light intensity of the external environment outside the vehicle is 15,000 lux, the light intensity in a lateral viewing direction inside the vehicle is 3,000 lux, resulting in an inside-to-outside contrast ratio of 1:5. In the rear row, when the light intensity of the external environment outside the vehicle is 16,000 lux, the light intensity in a forward viewing direction inside the vehicle is 700 lux (when the sunroof is closed), resulting in an inside-to-outside contrast ratio of approximately 1:25, thereby providing good privacy protection.

**Table 2 - Light Intensity Distribution Inside the Vehicle**

| | Sunroof 100% Open | Sunroof 50% Open | Sunroof 0% Open |
|---|---|---|---|
| Front Row Light Intensity (lux) | 5000 (Forward Viewing Direction) | 5000 (Forward Viewing Direction) | 5000 (Forward Viewing Direction) |
| | 3000 (Lateral Viewing Direction) | 3000 (Lateral Viewing Direction) | 3000 (Lateral Viewing Direction) |
| Rear Row Light Intensity (lux) | 1300 (Forward Viewing Direction) | 940 (Forward Viewing Direction) | 700 (Forward Viewing Direction) |

Table 3 schematically illustrates measured data of the degree of privacy protection for the front and rear rows. As shown in Table 3, when viewed from the lateral viewing direction, the light intensity in the front row is 3,000 lux, and the light intensity in the rear row is 650 lux. Accordingly, when viewed from a distance of 1 meters to 2 meters outside the vehicle, the situation in the front row, such as occupancy, gender, seat color, etc., may be roughly discerned, while the situation in the rear row is not visible, thus providing good privacy protection.

**Table 3 - Difference in Privacy Protection Caused by Different Light Intensities Between Front Row and Rear Row**

| | Front Row Light Intensity (lux) | Rear Row Light Intensity (lux) | |
|---|---|---|---|
| Outdoor | 3000 (Lateral Viewing Direction) | 650 (Lateral Viewing Direction) | Situation in front row is visible |

Based on the measured data, the inventors conclude through research that: (1) Safety is primarily related to the front-row side windows, especially in scenarios such as turning and lane changing, where visibility through the side windows is required; (2) privacy is primarily related to the rear-row side windows and the rear windshield glass sheet, and may also be related to the front-row side windows. When the privacy protection of the front row is required, the front-row side windows need to employ ultra-low transmittance glass sheets having a light transmittance lower than that of the rear-row glass sheets.

Based on the above, the embodiments of the present disclosure further provide a method for controlling a dimming glass system for a vehicle. In this control method, a plurality of dimming modes may be separately provided in the vehicle to balance the safety and the privacy protection, thereby facilitating user's dimming control of the vehicle.

FIG. 12 shows a flowchart of a method for controlling a dimming glass system according to some other exemplary embodiments of the present disclosure. In such embodiments, the control method includes steps S1210 to S1240.

In step S1210, a dimming mode selected by a user from preset n dimming modes is acquired, where n is a positive integer greater than or equal to 2.

For example, the n dimming modes may include a first dimming mode, a second dimming mode, and a third dimming mode. The first dimming mode may be a safety-related dimming mode. In the first dimming mode, a detection and determination of the safety-related event are performed primarily, and a dimming control is performed on front-row side windows according to the determination result. The second dimming mode may be a privacy-related dimming mode. In the second dimming mode, a detection and determination of the privacy-related event are performed primarily, and a dimming control is performed on rear-row side windows according to a determination result. The third dimming mode may be a privacy-related dimming mode for both front and rear side windows. In the third dimming mode, a detection and a determination are performed on both the safety-related event and the privacy-related event, and a dimming control is performed on the front-row side windows according to the determination result of the safety-related event, while a dimming control is performed on the rear side windows according to a determination result of the privacy-related event.

In step S1220, at least one of a safety-related event and a privacy-related event of the vehicle is detected.

In step S1230, a light transmittance adjustment information of the dimming glass sheet of the vehicle is determined according to the dimming mode selected by the user and the detected at least one event.

In step S1240, the light transmittance of the dimming glass sheet is adjusted according to the light transmittance adjustment information.

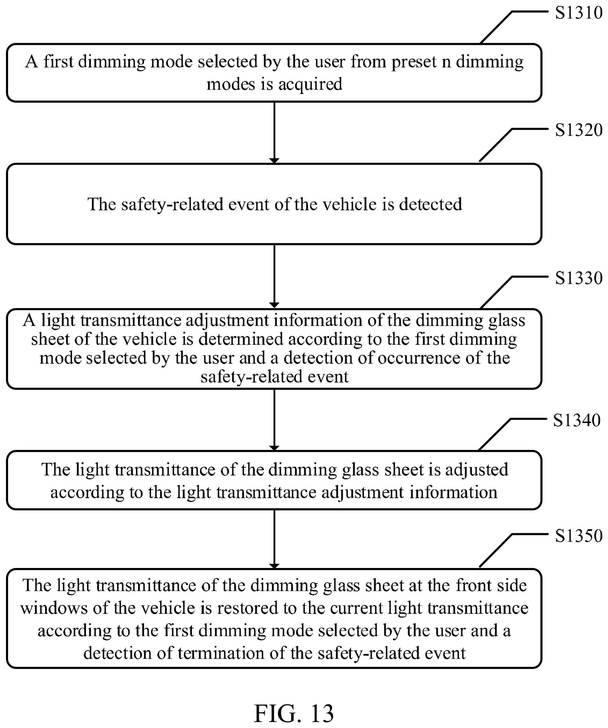

FIG. 13 shows a flowchart of a method for controlling a dimming glass system under a first dimming mode according to some other exemplary embodiments of the present disclosure. In such embodiments, the control method includes steps S1310 to S1350.

In step S1310, a first dimming mode selected by the user from the preset n dimming modes is acquired.

In step S1320, a detection of the safety-related event of the vehicle is performed. For example, the safety-related event may include at least one selected from: vehicle turning, lane changing, or high-speed driving.

In step S1330, a light transmittance adjustment information of the dimming glass sheet of the vehicle is determined according to the first dimming mode selected by the user and a detection of occurrence of the safety-related event. For example, the light transmittance of the dimming glass sheets at the front side windows of the vehicle may be increased.

In step S1340, the light transmittance of the dimming glass sheet is adjusted according to the light transmittance adjustment information.

In step S1350, the light transmittance of the dimming glass sheet at the front side windows of the vehicle is restored to a current light transmittance according to the first dimming mode selected by the user and a detection of termination of the safety-related event. For example, the current light transmittance may be the initial light transmittance in the first dimming mode or a current light transmittance of the dimming glass sheet at the front-row side window set by the user.

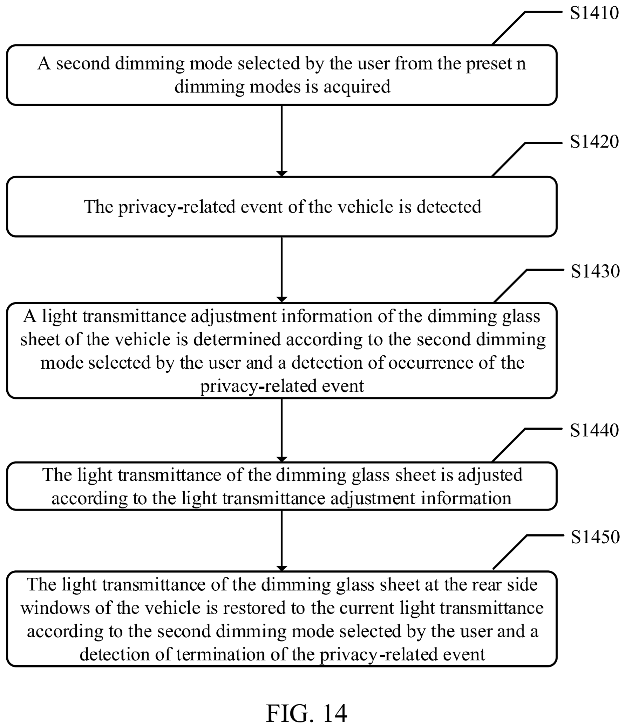

FIG. 14 shows a flowchart of a method for controlling a dimming glass system under a second dimming mode according to some other exemplary embodiments of the present disclosure. In such embodiments, the control method includes steps S1410 to S1450.

In step S1410, a second dimming mode selected by the user from the preset n dimming modes is acquired.

In step S1420, a detection of the privacy-related event of the vehicle is performed. For example, the privacy-related event may include events such as an occupant inside the vehicle resting or another vehicle being present at the periphery of the vehicle.

In step S 1430, a light transmittance adjustment information of the dimming glass sheet of the vehicle is determined according to the second dimming mode selected by the user and a detection of occurrence of the privacy-related event. For example, the light transmittance of the dimming glass sheet at the rear side windows of the vehicle may be decreased.

In step S1440, the light transmittance of the dimming glass sheet is adjusted according to the light transmittance adjustment information.

In step S1450, the light transmittance of the dimming glass sheet at the rear side windows of the vehicle is restored to the current light transmittance according to the second dimming mode selected by the user and a detection of termination of the privacy-related event. For example, the current light transmittance may be the initial light transmittance in the second dimming mode or the current light transmittance of the dimming glass sheet at the rear side windows set by the user.

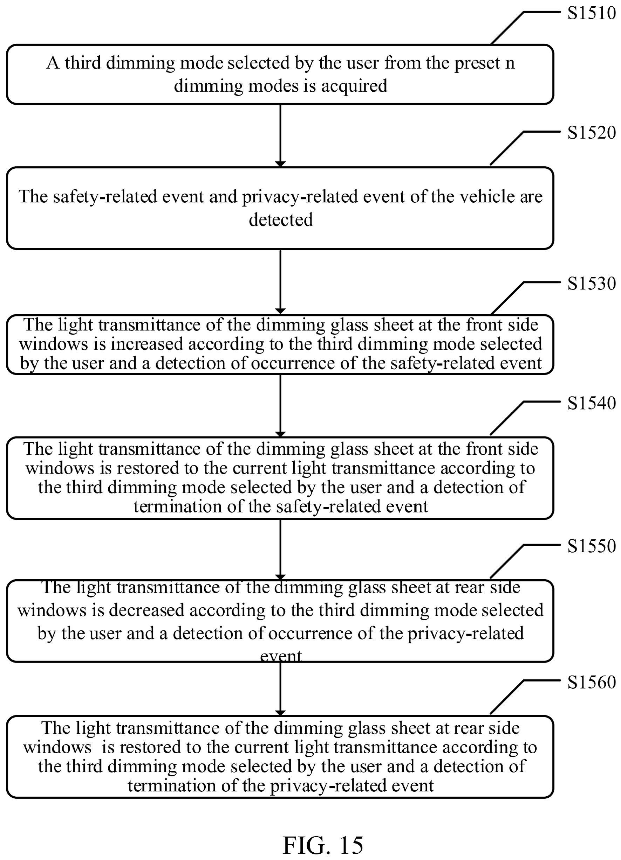

FIG. 15 shows a flowchart of a method for controlling a dimming glass system under a third dimming mode according to some other exemplary embodiments of the present disclosure. In such embodiments, the control method includes steps S1510 to S1560.

In step S1510, a third dimming mode selected by the user from the preset n dimming modes is acquired.

In step S1520, detections of the safety-related event and the privacy-related event of the vehicle are performed.

In step S1530, the light transmittance of the dimming glass sheet at the front side windows of the vehicle is increased according to the third dimming mode selected by the user and a detection of occurrence of the safety-related event.

In step S1540, the light transmittance of the dimming glass sheet at the front side windows of the vehicle is restored to the current light transmittance according to the third dimming mode selected by the user and a detection of termination of the safety-related event.

In step S1550, the light transmittance of the dimming glass sheet at the rear side windows of the vehicle is decreased according to the third dimming mode selected by the user and a detection of occurrence of the privacy-related event.

In step S1560, the light transmittance of the dimming glass sheet at the rear side windows of the vehicle is restored to the current light transmittance according to the third dimming mode selected by the user and a detection of termination of the privacy-related event.

In some exemplary embodiments, the method further includes: determining an initial light transmittance of the dimming glass sheet according to the dimming mode selected by the user and an environment surrounding the vehicle.

For example, the initial light transmittance of the dimming glass sheets at the front side windows of the vehicle may be higher than that of the dimming glass sheets at the rear side windows of the vehicle.

Optionally, in some exemplary embodiments, the method further includes: adjusting the current light transmittance of the dimming glass sheet in response to a user input. For example, the in-vehicle control system may receive inputs from users at front and rear rows and adjust the current light transmittance according to the input of the user.

In some embodiments of the present disclosure, there is further provided a method for controlling a dimming glass system for a vehicle, in which existing vehicle driving modes of the vehicle are respectively assigned with corresponding safety options and/or privacy options, so as to balance safety and privacy protection, thereby providing an improved driving and riding experience for users.

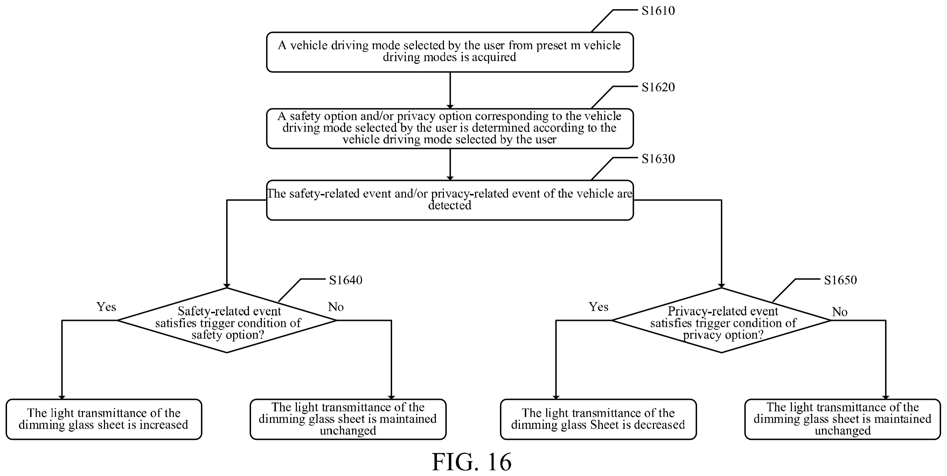

FIG. 16 shows a flowchart of a method for controlling a dimming glass system according to further exemplary embodiments of the present disclosure. In this embodiment, the control method includes steps S1610 to S1650. It will be noted that, in the case of no conflict, the methods and steps described in the foregoing embodiments may be combined into this embodiment. In the following description, only the main aspects of this embodiment are elaborated, while other parts may refer to the descriptions provided in the foregoing embodiments and will not be repeated here.

In step S1610, a vehicle driving mode selected by the user from preset m vehicle driving modes is acquired, where each of the m vehicle driving modes has a respective safety option and/or a respective privacy option, and m is a positive integer greater than or equal to 2.

In step S1620, the safety option corresponding to the vehicle driving mode selected by the user is determined according to the vehicle driving mode selected by the user.

Optionally or additionally, the privacy option corresponding to the vehicle driving mode selected by the user is determined according to the vehicle driving mode selected by the user.

In step S 1630, a detection of the safety-related event of the vehicle is performed.

Optionally or additionally, a detection of the privacy-related event of the vehicle is performed.

In step S 1640, in response to the safety-related event of the vehicle satisfying a trigger condition of the safety option corresponding to the vehicle driving mode, the light transmittance of the dimming glass sheet is adjusted according to a corresponding dimming mode among n dimming modes.

In response to the safety-related event of the vehicle failing to satisfy the trigger condition of the safety option corresponding to the vehicle driving mode, the light transmittance of the at least one dimming glass sheet of the vehicle is maintained unchanged, for example, maintained at the initial light transmittance or the current light transmittance.

Optionally or additionally, in step S1650, in response to a privacy-related event of the vehicle satisfying a trigger condition of the privacy option corresponding to the vehicle driving mode, the light transmittance of the dimming glass sheet is adjusted according to a corresponding dimming mode among the n dimming modes.

In response to the privacy-related event of the vehicle failing to satisfy the trigger condition of the privacy option corresponding to the vehicle driving mode, the light transmittance of the at least one dimming glass sheet of the vehicle is maintained unchanged, for example, maintained at the initial light transmittance or the current light transmittance.

In some embodiments of the present disclosure, the dimming modes described above may be combined with the safety option and/or privacy option. That is, when the safety-related event and/or privacy-related event of the vehicle satisfy the trigger condition of the corresponding safety option and/or privacy option, the light transmittance of the dimming glass sheet may be adjusted according to a corresponding dimming mode among the n dimming modes.

In some embodiments, the n dimming modes may include a first dimming mode, a second dimming mode, and a third dimming mode. The first dimming mode may be a safety-related dimming mode. In the first dimming mode, a detection and determination of the safety-related event are performed primarily, and a dimming control is performed on the front-row side windows according to the determination result. The second dimming mode may be a privacy-related dimming mode. In the second dimming mode, a detection and determination of the privacy-related event are performed primarily, and a dimming control is performed on the rear side windows according to a determination result. The third dimming mode may be a privacy-related dimming mode for both front-row side windows and rear side windows. In the third dimming mode, a detection and determination are performed for both the safety-related event and the privacy-related event, and a dimming control is performed on the front-row side windows according to the determination result of the safety-related event, while a dimming control is performed on the rear-row side windows according to the determination result of the privacy-related event.

In some embodiments, in step S 1640, in response to the safety-related event of the vehicle satisfying the trigger condition of the safety option corresponding to the vehicle driving mode, the light transmittance of the dimming glass sheet may be adjusted according to the first dimming mode. For example, the light transmittance of at least one dimming glass sheet of the vehicle may be increased.

In step S1650, in response to the privacy-related event of the vehicle satisfying the trigger condition of the privacy option corresponding to the vehicle driving mode, the light transmittance of the dimming glass sheet is adjusted according to the second dimming mode or the third dimming mode. For example, the light transmittance of at least one dimming glass sheet of the vehicle may be decreased.

In some exemplary embodiments, each of the n dimming modes has a respective fixed light transmittance or a respective fixed light transmittance range. That is, each of the n dimming modes correspond to a fixed light transmittance or light transmittance range. After a vehicle driving mode is selected by the user, a dimming mode that is mapped to the selected vehicle driving mode may be determined, and the fixed light transmittance or light transmittance range corresponding to the dimming mode. may be determined.

In some exemplary embodiments, the light transmittance or light transmittance range in the first dimming mode is higher than that in the second dimming mode. Through such a design, the light transmittance in the Sport mode may be higher than that in the Normal mode, thereby achieving both safety in the Sport mode and privacy protection in the Normal mode.

In some exemplary embodiments, the light transmittance or light transmittance range in the third dimming mode lies between that in the first dimming mode and that in the second dimming mode.

In some embodiments of the present disclosure, the dimming mode may further be considered in combination with the occupant distribution inside the vehicle.

In some embodiments, in step S1640, adjusting the light transmittance of the at least one dimming glass sheet of the vehicle according to the first dimming mode among the n dimming modes includes: acquiring an occupant distribution inside the vehicle; and determining, according to the occupant distribution inside the vehicle and the first dimming mode, the dimming glass sheet that requires a light transmittance adjustment.

In some embodiments, in step S1650, adjusting the light transmittance of the at least one dimming glass sheet of the vehicle according to the second dimming mode or the third dimming mode among the n dimming modes includes: acquiring an occupant distribution inside the vehicle; and determining, according to the occupant distribution inside the vehicle and the second dimming mode, the dimming glass sheet that requires a light transmittance adjustment.

For example, increasing the light transmittance of the at least one dimming glass sheet of the vehicle includes: increasing the light transmittance of the dimming glass sheet at the driver-side window of the vehicle.

For example, decreasing the light transmittance of the at least one dimming glass sheet includes: decreasing the light transmittance of the dimming glass sheet at the driver-side window and the light transmittance of the dimming glass sheet at side windows close to passengers inside the vehicle.

In some embodiments of the present disclosure, the light transmittance of dimming glass sheets close to the occupants inside the vehicle may be adjusted according to the occupant distribution inside the vehicle. For example, when a passenger is seated at the rear-row-left position of the vehicle, the glass sheet at the rear-row-left window may be determined as the glass sheet that requires a light transmittance adjustment; when a passenger is seated at the rear-row-right position of the vehicle, the glass sheet at the rear-right window may be determined as the glass sheet that requires a light transmittance adjustment; when a passenger is seated at the rear-row-center position of the vehicle, the glass sheets at both rear-row side windows may be determined as the glass sheets that require a light transmittance adjustment.

In some embodiments of the present disclosure, when adjusting the light transmittance according to the occupant distribution inside the vehicle, environmental factors such as weather conditions and light intensity should also be taken into account. For example, in a mode intended for sun shading, "determining the light transmittance according to the occupant distribution" may include adjusting the light transmittance so that the glass close to occupants inside the vehicle has a low transmittance, thereby reducing external light exposure to occupants inside the vehicle. In certain modes designed to protect safe driving, for example, to avoid strong external light from dazzling the driver, the light transmittance of the driver-side window glass may be decreased. In a mode intended to facilitate occupants' observation of the external environment, for instance, enabling the driver to better observe surrounding vehicles when exiting a dimly lit underground garage, or allowing rear-seat passengers to more easily enjoy scenic views during travel, the light transmittance of the glass close to occupants inside the vehicle may be increased.

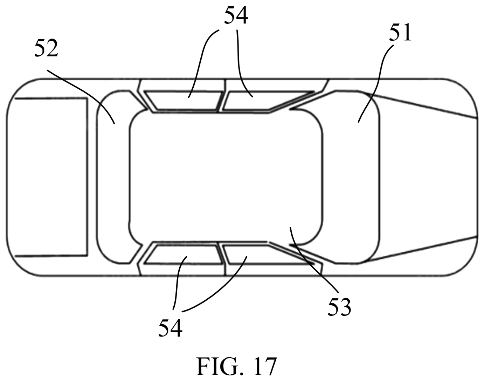

FIG. 17 shows a schematic diagram of an application of the dimming glass system in a vehicle according to embodiments of the present disclosure, where a top view of the vehicle is illustrated in FIG. 17. As shown in FIG. 17, the dimming glass sheet in the dimming glass system may include at least one of: a front windshield glass 51, a rear windshield glass 52, a sunroof glass 53, a sun visor, and all side window glasses 54 of the vehicle. That is, at least one of the front windshield glass, the rear windshield glass, the sunroof glass, the sun visor, and all the side window glasses of the vehicle may employ the dimming glass sheet in the dimming glass system according to embodiments of the present disclosure. Accordingly, the method for controlling a dimming glass system according to embodiments of the present disclosure may be applied to the glass.

It will be noted that in embodiments of the present disclosure, some steps in the above method may be performed separately or in combination, and may be performed in parallel or sequentially, which are not limited to the specific operation sequence shown in the figures.

Some embodiments according to the general inventive concept of the present disclosure have been shown and described. However, those skilled in the art may understand that changes may be made to these embodiments without departing from the principles and spirit of the general inventive concept of the present disclosure, and the scope of the present disclosure is determined by the claims and their equivalents.

## Claims

1. A method for controlling a dimming glass system for a vehicle, wherein the dimming glass system comprises a dimming glass sheet mounted on the vehicle, the method comprising:
acquiring a vehicle driving mode selected by a user from preset m vehicle driving modes, where m is a positive integer greater than or equal to 2;
determining, according to a mapping relationship between vehicle driving modes and dimming modes, a dimming mode corresponding to the vehicle driving mode selected by the user, wherein the mapping relationship between the vehicle driving modes and the dimming modes comprises a mapping relationship between the preset m vehicle driving modes and n dimming modes, where n is a positive integer greater than or equal to 2; and
controlling the dimming glass system of the vehicle according to the dimming mode.

2. The method of claim 1, wherein each of the n dimming modes has a respective fixed light transmittance or a respective fixed light transmittance range; and
wherein the controlling the dimming glass system of the vehicle according to the dimming mode comprises: controlling the dimming glass system of the vehicle according to the fixed light transmittance or the fixed light transmittance range of the dimming mode.

3. The method of claim 1 or 2, wherein
the m vehicle driving modes comprise a first vehicle driving mode, the n dimming modes comprise a first dimming mode, and the mapping relationship between the vehicle driving modes and the dimming modes comprises a mapping relationship between the first vehicle driving mode and the first dimming mode;
the m vehicle driving modes further comprise a second driving mode, the n dimming modes further comprise a second dimming mode, and the mapping relationship between the vehicle driving modes and the dimming modes further comprises a mapping relationship between the second vehicle driving mode and the second dimming mode; and
a light transmittance or a light transmittance range in the first dimming mode is higher than that in the second dimming mode.

4. The method of claim 3, wherein:
the m vehicle driving modes further comprise a third driving mode, the n dimming modes further comprise a third dimming mode, and the mapping relationship between the vehicle driving modes and the dimming modes further comprises a mapping relationship between the third vehicle driving mode and the third dimming mode; and
a light transmittance or a light transmittance range in the third dimming mode lies between that in the first dimming mode and that in the second dimming mode.

5. The method of any one of claims 1 to 4, further comprising:
acquiring an occupant distribution inside the vehicle; and
determining, according to the occupant distribution inside the vehicle, a dimming glass sheet that requires a light transmittance adjustment.

6. The method of any one of claims 1 to 5, further comprising:
controlling a front passenger seat to move backward in response to the vehicle turning toward a side where the front passenger seat is located.

7. The method of any one of claims 1 to 6, further comprising:
detecting at least one of a safety-related event and a privacy-related event of the vehicle;
wherein the controlling the dimming glass system of the vehicle according to the dimming mode comprises:
determining a light transmittance adjustment information of the dimming glass sheet of the vehicle according to the dimming mode selected by the user and the detected at least one event; and
adjusting a light transmittance of the dimming glass sheet according to the light transmittance adjustment information.

8. The method of claim 7, wherein in at least two of the n dimming modes, a priority of the safety-related event is different from a priority of the privacy-related event.

9. The method of claim 7 or 8, wherein
the m vehicle driving modes comprise a first vehicle driving mode, the n dimming modes comprise a first dimming mode, and the mapping relationship between the vehicle driving modes and the dimming modes comprises a mapping relationship between the first vehicle driving mode and the first dimming mode; and
in the first dimming mode, the priority of each safety-related event is higher than the priority of the privacy-related event.

10. The method of any one of claims 7 to 9, wherein the m vehicle driving modes further comprise a second driving mode, the n dimming modes further comprise a second dimming mode, and the mapping relationship between the vehicle driving modes and the dimming modes further comprises a mapping relationship between the second vehicle driving mode and the second dimming mode; and
in the second dimming mode, the priority of at least part of the privacy-related event is higher than the priority of at least part of the safety-related event.

11. The method of claim 10, further comprising:
determining an initial light transmittance of the dimming glass sheet according to a determined dimming mode, wherein an initial light transmittance in the first dimming mode is higher than an initial light transmittance in the second dimming mode.

12. The method of any one of claims 7 to 11, wherein the safety-related event comprises at least one event selected from: vehicle turning, lane changing, or a vehicle speed exceeding a speed threshold.

13. The method of any one of claims 7 to 12, wherein the privacy-related event comprises at least one event selected from: a passenger inside the vehicle being in a resting state, or another vehicle being present at a periphery of the vehicle.

14. The method of any one of claims 9 to 13, wherein the determining a light transmittance adjustment information of the dimming glass sheet of the vehicle according to the determined dimming mode comprises:
performing a determination on each the safety-related event according to the determined first dimming mode;
increasing a light transmittance of at least one dimming glass sheet in response to at least one safety-related event satisfying a safety protection trigger condition;
performing a determination on the privacy-related event in response to each safety-related event failing to satisfy the safety trigger condition; and
decreasing a light transmittance of at least one dimming glass sheet in response to at least one privacy-related event satisfying a privacy protection trigger condition.

15. The method of any one of claims 9 to 13, wherein the determining a light transmittance adjustment information of the dimming glass sheet of the vehicle according to the determined dimming mode comprises:
performing a determination on a first safety-related event according to the determined first dimming mode;
increasing a light transmittance of at least one dimming glass sheet in response to the first safety-related event satisfying a safety protection trigger condition;
performing a determination on a second safety-related event in response to the first safety-related event failing to satisfy the safety protection trigger condition;
increasing a light transmittance of at least one dimming glass sheet in response to the second safety-related event satisfying a safety protection trigger condition;
performing a determination on at least one privacy-related event in response to the second safety-related event failing to satisfy the safety protection trigger condition; and
decreasing a light transmittance of at least one dimming glass sheet in response to at least one privacy-related event satisfying a privacy protection trigger condition.

16. The method of any one of claims 9 to 13, wherein the determining a light transmittance adjustment information of the dimming glass sheet of the vehicle according to the determined dimming mode comprises:
performing a determination on at least one privacy-related event according to the determined second dimming mode;
performing a determination on at least one safety-related event in response to the at least one privacy-related event satisfying a privacy protection trigger condition; and
decreasing a light transmittance of at least one dimming glass sheet in response to the at least one safety-related event failing to satisfy a safety protection trigger condition.

17. The method of any one of claims 9 to 13, wherein the determining a light transmittance adjustment information of the dimming glass sheet of the vehicle according to the determined dimming mode comprises:
performing a determination on a first safety-related event according to the determined second dimming mode;
increasing a light transmittance of at least one dimming glass sheet in response to the first safety-related event satisfying a safety protection trigger condition;
performing a determination on at least one privacy-related event in response to the first safety-related event failing to satisfy the safety protection trigger condition;
increasing a light transmittance of at least one dimming glass sheet in response to the at least one privacy-related event failing to satisfy a privacy protection trigger condition;
performing a determination on a second safety-related event in response to the at least one privacy-related event satisfying the privacy protection trigger condition;
increasing a light transmittance of at least one dimming glass sheet in response to the second safety-related event satisfying a safety protection trigger condition; and
decreasing a light transmittance of at least one dimming glass sheet in response to the second safety-related event failing to satisfy the safety protection trigger condition.

18. The method of any one of claims 9 to 13, wherein the determining a light transmittance adjustment information of the dimming glass sheet of the vehicle according to the determined dimming mode comprises:
performing a determination on a first safety-related event according to the determined third dimming mode; and
increasing a light transmittance of at least one dimming glass sheet in response to the first safety-related event satisfying a safety protection trigger condition.

19. The method of claim 15 or 17, wherein the first safety-related event comprises vehicle turning or lane changing, the second safety-related event comprises a vehicle speed exceeding a speed threshold, and the at least one privacy-related event comprises another vehicle being present at a periphery of the vehicle.

20. The method of claim 19, wherein the first safety-related event satisfying the safety protection trigger condition comprises: the vehicle turning or changing lanes; and/or
the second safety-related event satisfying the safety protection trigger condition comprises: the vehicle speed of the vehicle exceeding a preset speed threshold; and/or
the at least one privacy-related event satisfying the privacy protection trigger condition comprises: another vehicle is present at a periphery of the vehicle.

21. The method of any one of claims 1 to 20, further comprising:
adjusting an initial light transmittance of the dimming glass sheet according to an environment surrounding the vehicle.

22. The method of claim 15 or 17, wherein the increasing the light transmittance of at least one dimming glass sheet in response to the first safety-related event satisfying a safety protection trigger condition comprises: in response to the first safety-related event satisfying the safety protection trigger condition, increasing a light transmittance of dimming glass sheets at front-row side windows of the vehicle; and/or
the increasing a light transmittance of at least one dimming glass sheet in response to the second safety-related event satisfying a safety protection trigger condition comprises: in response to the second safety-related event satisfying the safety protection trigger condition, increasing a light transmittance of a dimming glass sheet at a driver-side window of the vehicle and a light transmittance of a dimming glass sheet at a side window close to a passenger inside the vehicle; and/or
the decreasing a light transmittance of at least one dimming glass sheet comprises: decreasing the light transmittance of the dimming glass sheet at the driver-side window of the vehicle and the light transmittance of the dimming glass sheet at the side window close to the passenger in the vehicle.

23. A method for controlling a dimming glass system for a vehicle, wherein the dimming glass system comprises a dimming glass sheet mounted on the vehicle, the method comprising:
acquiring a dimming mode selected by a user from preset n dimming modes, where n is a positive integer greater than or equal to 2; and
controlling the dimming glass system of the vehicle according to the dimming mode.

24. The method of claim 23, wherein each of the n dimming modes has a respective fixed light transmittance or a respective fixed light transmittance range; and
wherein the controlling the dimming glass system of the vehicle according to the dimming mode comprises: controlling the dimming glass system of the vehicle according to the fixed light transmittance or the fixed light transmittance range of the dimming mode.

25. The method of claim 23 or 24, wherein the n dimming modes comprise a first dimming mode and a second dimming mode; and
wherein a light transmittance or a light transmittance range in the first dimming mode is higher than that in the second dimming mode.

26. The method of claim 25, wherein the n dimming modes further comprise a third dimming mode; and
wherein a light transmittance or a light transmittance range in the third dimming mode lies between that in the first dimming mode and that in the second dimming mode.

27. The method of any one of claims 23 to 26, further comprising:
acquiring an occupant distribution inside the vehicle; and
determining, according to the occupant distribution inside the vehicle, a dimming glass sheet that requires a light transmittance adjustment.

28. The method of any one of claims 23 to 27, further comprising:
detecting at least one of a safety-related event and a privacy-related event of the vehicle;
wherein the controlling the dimming glass system of the vehicle according to the dimming mode comprises:
determining a light transmittance adjustment information of the dimming glass sheet of the vehicle according to the dimming mode selected by the user and the detected at least one event; and
adjusting a light transmittance of the dimming glass sheet according to the light transmittance adjustment information.

29. The method of claim 28, further comprising:
determining an initial light transmittance of the dimming glass sheet according to the dimming mode selected by the user and an environment surrounding the vehicle.

30. The method of claim 29, wherein an initial light transmittance of a dimming glass sheet at a front side window of the vehicle is higher than that of a dimming glass sheet at a rear side window of the vehicle.

31. The method of any one of claims 28 to 30, further comprising:
adjusting a current light transmittance of the dimming glass sheet in response to a user input.

32. The method of any one of claims 28 to 31, wherein the acquiring a dimming mode selected by a user from preset n dimming modes comprises: acquiring a first dimming mode selected by the user from the preset n dimming modes;
wherein the detecting at least one of a safety-related event and a privacy-related event of the vehicle comprises: detecting the safety-related event of the vehicle; and
wherein the determining a light transmittance adjustment information of the dimming glass sheet of the vehicle according to the dimming mode selected by the user and the detected at least one event comprises: increasing a light transmittance of a dimming glass sheet at a front side window of the vehicle according to the first dimming mode selected by the user and a detection of occurrence of the safety-related event.

33. The method of claim 32, wherein the determining a light transmittance adjustment information of the dimming glass sheet of the vehicle according to the dimming mode selected by the user and the detected at least one event comprises: restoring the light transmittance of the dimming glass sheet at the front side window of the vehicle to the current light transmittance according to the first dimming mode selected by the user and a detection of termination of the safety-related event.

34. The method of any one of claims 28 to 31, wherein the acquiring a dimming mode selected by a user from preset n dimming modes comprises: acquiring a second dimming mode selected by the user from the preset n dimming modes;
wherein the detecting at least one of a safety-related event and a privacy-related event of the vehicle comprises: detecting the privacy-related event of the vehicle; and
wherein the determining a light transmittance adjustment information of the dimming glass sheet of the vehicle according to the dimming mode selected by the user and the detected at least one event comprises: decreasing a light transmittance of a dimming glass sheet at a rear side window of the vehicle according to the second dimming mode selected by the user and a detection of occurrence of the privacy-related event.

35. The method of claim 34, wherein the determining a light transmittance adjustment information of the dimming glass sheet of the vehicle according to the dimming mode selected by the user and the detected at least one event comprises: restoring the light transmittance of the dimming glass sheet at the rear side window of the vehicle to the current light transmittance according to the second dimming mode selected by the user and a detection of termination of the privacy-related event.

36. The method of any one of claims 28 to 31, wherein the acquiring a dimming mode selected by a user from preset n dimming modes comprises: acquiring a third dimming mode selected by the user from the preset n dimming modes;
wherein the detecting at least one of a safety-related event and a privacy-related event of the vehicle comprises: detecting the safety-related event and the privacy-related event of the vehicle;
wherein the determining a light transmittance adjustment information of the dimming glass sheet of the vehicle according to the dimming mode selected by the user and the detected at least one event comprises:
increasing a light transmittance of a dimming glass sheet at a front side window of the vehicle according to the third dimming mode selected by the user and a detection of occurrence of the safety-related event;
restoring the light transmittance of the dimming glass sheet at the front side window of the vehicle to the current light transmittance according to the third dimming mode selected by the user and a detection of termination of the safety-related event;
decreasing a light transmittance of a dimming glass sheet at a rear side window of the vehicle according to the third dimming mode selected by the user and a detection of occurrence of the privacy-related event; and
restoring the light transmittance of the dimming glass sheet at the rear side window of the vehicle to the current light transmittance according to the third dimming mode selected by the user and a detection of termination of the privacy-related event.

37. A method for controlling a dimming glass system for a vehicle, wherein the dimming glass system comprises a dimming glass sheet mounted on the vehicle, the method comprising:
acquiring a vehicle driving mode selected by a user from preset m vehicle driving modes, wherein each of the m vehicle driving modes has a respective safety option, and m is a positive integer greater than or equal to 2;
determining, according to the vehicle driving mode selected by the user, a safety option corresponding to the vehicle driving mode selected by the user;
detecting a safety-related event of the vehicle; and
in response to the safety-related event of the vehicle satisfying a trigger condition of the safety option corresponding to the vehicle driving mode, adjusting a light transmittance of at least one dimming glass sheet of the vehicle according to a first dimming mode among n dimming modes, where n is a positive integer greater than or equal to 2.

38. The method of claim 37, wherein each of the m vehicle driving modes has a respective privacy option, the method further comprising:
determining, according to the vehicle driving mode selected by the user, a privacy option corresponding to the vehicle driving mode selected by the user;
detecting a privacy-related event of the vehicle; and
in response to the privacy-related event of the vehicle satisfying a trigger condition of the privacy option corresponding to the vehicle driving mode, adjusting a light transmittance of at least one dimming glass sheet of the vehicle according to a second dimming mode or a third dimming mode among the n dimming modes.

39. The method of claim 38, wherein each of the n dimming modes has a respective fixed light transmittance or a respective fixed light transmittance range, and a light transmittance or a light transmittance range in the first dimming mode is higher than that in the second dimming mode or that in the third dimming mode.

40. The method of claim 38 or 39, wherein the adjusting a light transmittance of at least one dimming glass sheet of the vehicle according to a first dimming mode among n dimming modes comprises: acquiring an occupant distribution inside the vehicle; and determining, according to the occupant distribution inside the vehicle and the first dimming mode, a dimming glass sheet that requires a light transmittance adjustment; and/or
wherein the adjusting a light transmittance of at least one dimming glass sheet of the vehicle according to a second dimming mode or a third dimming mode among the n dimming modes comprises: acquiring an occupant distribution inside the vehicle; and determining, according to the occupant distribution inside the vehicle and the second dimming mode, a dimming glass sheet that requires a light transmittance adjustment.

41. The method of claim 38 or 39, wherein the adjusting a light transmittance of at least one dimming glass sheet of the vehicle according to a first dimming mode among n dimming modes comprises: increasing the light transmittance of the at least one dimming glass sheet of the vehicle; and/or
wherein the adjusting a light transmittance of at least one dimming glass sheet of the vehicle according to a second dimming mode or a third dimming mode among the n dimming modes comprises: decreasing the light transmittance of the at least one dimming glass sheet of the vehicle.

42. A dimming glass system for a vehicle, comprising:
a dimming glass sheet mounted on the vehicle, wherein the dimming glass sheet comprises: a first base substrate and a second base substrate arranged opposite to each other; a first electrode disposed on the first base substrate; a second electrode disposed on the second base substrate; and a dimming component interposed between the first base substrate and the second base substrate; and
a controller electrically connected to the first electrode and the second electrode of the dimming glass sheet, wherein the controller is configured to perform the method of any one of claims 1 to 41.
